# EUROPEAN PATENT SPECIFICATION

(11) **EP 1 863 155 B1**
(45) Date of publication and mention of the grant of the patent: **26.09.2018**
(21) Application number: 07010155.5
(22) Date of filing: 22.05.2007
(51) Int. Cl.: H02K 41/03, H02K 15/02, H02K 15/08, H02K 1/14

(54) **Linear motor**
Linearmotor
Moteur linéaire

(30) Priority: 29.05.2006 JP 2006147679
(43) Date of publication of application: 05.12.2007
(73) Proprietor: MITSUBISHI ELECTRIC CORPORATION, Chiyoda-ku Tokyo 100-8310 (JP)
(72) Inventor: Yamashiro, Satoshi, Tokyo 100-8310 (JP); Kimura, Yasuki, Tokyo 100-8310 (JP); Hashimoto, Akira, Tokyo 100-8310 (JP); Watarai, Akira, Tokyo 100-8310 (JP)
(74) Representative: Popp, Eugen

(56) References cited:
- JP-A- 11 178 310
- JP-A- 2000 217 334
- US-A1- 2004 256 919

## Description

### BACKGROUND OF THE INVENTION

### 1. Field of the Invention

The present invention relates to a structure of an armature of a linear motor for use in general industrial machinery.

### 2. Description of the Background Art

In the conventional armatures for use in a type of linear motor provided with a thrust generating face on one side of the linear motor (hereinafter referred to as "single-sided linear motor") (for example, refer to claim 1 and Fig. 1 of the Japanese Patent Publication (unexamined) No. 217334/2000) and for use in another type of linear motor provided with a thrust generating face on both sides of the linear motor (hereinafter referred to as "double-sided linear motor") (for example, refer to [0011] and Fig. 8 of the Japanese Patent Publication (unexamined) No. 178310-1999), pole teeth of different shapes that are manufactured to be dedicated respectively are employed. Furthermore, as a manufacturing method of an armature of a linear motor, for example, adjacent pole teeth are connected by engagement of dovetail grooves being inserted in a stack direction.

In the above-mentioned conventional linear motor, with respect to a single-sided linear motor and a double-sided linear motor, respective dedicated pole teeth need to be manufactured, resulting in lower productivity. Moreover, since adjacent pole teeth are connected by engagement of dovetail grooves being inserted in a stack direction, in case of a small gap between adjacent engaging portions, due to, e.g., the fall of the pole teeth, the engaging portions cannot be inserted without being strongly pressed. Thus, productivity is low, and in case of being forcibly pressed, it is sometimes the case to invite a problem of occurrence of any crack of a laminate. On the other hand, in case of a larger gap between adjacent engaging portions, assembly accuracy of an armature comes to be worse. Thus, there is a possibility that motor characteristics are adversely affected, or rigidity becomes low.

US2004/256919 is considered to be the closest prior art and discloses a linear motor comprising: a field part that includes a field yoke extending in a motor driving direction, and a plurality of permanent magnets which are disposed at predetermined intervals along said motor driving direction on said field yoke; and of which polarities are alternately different; and an armature that includes a plurality of pole teeth disposed via a predetermined space from the permanent magnets of the field part and disposed in order in said motor driving direction, and a driving coil, provided at said pole teeth; said pole teeth is formed of a yoke portion positioned on the back side of a face opposite to said field part and being in contact with said adjacent pole teeth, and a tooth portion, formed to protrude from said yoke portion to the side opposite to said field part; and said pole teeth includes a first pole tooth and a second pole tooth disposed adjacent to said first pole tooth, only the first pole tooth is wound with the driving coil; an engaging portion is provided at an end face on both sides at the yoke portion of said first pole tooth, and a joint portion to be engaged with said engaging portion is provided at an end face on both sides at the yoke portion of said second pole tooth; and said first and second pole teeth are disposed in order along said motor driving direction and secured onto a fixing member, while engaging the engaging portion of said first pole tooth with the joint portion of said second pole tooth. Further prior art is given in JP 11 178310 which describes a linear motor comprising: a field part that includes a plurality of permanent magnets which are disposed at predetermined intervals in opposition in two rows along a motor driving direction, and of which polarities are alternately different; and an armature that includes a plurality of pole teeth disposed via a predetermined space from the permanent magnets of said field part and disposed in order in said motor driving direction, and a driving coil provided at said pole teeth; said pole teeth is formed of a yoke portion positioned at the central portion between said two rows of permanent magnets and being in contact with said adjacent pole teeth, and a tooth portion formed to protrude from said yoke portion to both sides opposite to said permanent magnets;

### SUMMARY OF THE INVENTION

The present invention was made to solve the problems as mentioned above, and has an object of providing a linear motor of high productivity in which both a single-sided linear motor and a double-sided linear motor can be constructed with the same pole teeth, and adjacent pole teeth can be easily connected by such a simple method as sliding a pole teeth.

A linear motor according to a first embodiment, and given in claim 1, which comprises:
a field part that includes a field yoke extending in a motor driving direction, and a plurality of permanent magnets which are disposed at predetermined intervals along said motor driving direction on said field yoke, and of which polarities are alternately different; and an armature that includes a plurality of pole teeth disposed via a predetermined space from the permanent magnets of the field part and disposed in order in said motor driving direction, and a driving coil provided at said pole teeth;
said pole teeth is formed of a yoke portion positioned on the back side of a face opposite to said field part and being in contact with said adjacent pole teeth, and
a tooth portion formed to protrude from said yoke portion to the side opposite to said field part; and
said pole teeth includes a first pole tooth and a second pole tooth disposed adjacent to said first pole tooth;
only the first pole tooth is wound with the driving coil;
an engaging portion is provided at an end face on both sides at the yoke portion of said first pole tooth, and a joint portion to be engaged with said engaging portion is provided at an end face on both sides at the yoke portion of said second pole tooth;
said first pole tooth includes a pair of a first core member and a second core member respectively having a yoke portion of different heights, and a tooth portion of the same height, wherein each yoke of the core member which has the greater yoke height, is provided with a hole there-through, and said first and second core members are laminated so that respective tooth portions are aligned and said laminated first and second core members are connected in said lamination direction; and
said first and second pole teeth are disposed in order along said motor driving direction and secured onto a fixing member by means of a screw passing through the hole or a mold filling the hole, while engaging the engaging portion of said first pole tooth with the joint portion of said second pole tooth.

In a second embodiment, according to claim 2, there is provided a linear motor comprising:
a field part that includes a plurality of permanent magnets which are disposed at predetermined intervals in opposition in two rows along a motor driving direction, and of which polarities are alternately different; and
an armature that includes a plurality of pole teeth disposed via a predetermined space from the permanent magnets of said field part and disposed in order in said motor driving direction, and a driving coil provided at said pole teeth;
said pole teeth is formed of a yoke portion positioned at the central portion between said two rows of permanent magnets and being in contact with said adjacent pole teeth, and a tooth portion formed to protrude from said yoke portion to both sides opposite to said permanent magnets; and
said pole teeth includes a first pole tooth and a second pole tooth disposed adjacent to said first pole tooth; and
said driving coil provided at any one or both of said first pole tooth and said second pole tooth;
an engaging portion is provided at an end face on both sides at the yoke portion of said first pole tooth, and a joint portion to be engaged with said engaging portion is provided at an end face on both sides at the yoke portion of said second pole tooth;
said first pole tooth includes a pair of core members being a first core member and a second core member having a yoke portion of different heights, and a tooth portion of the same height, wherein each yoke of the core member which has the greater yoke height, is provided with a hole there-through, which is positioned so as to be at the centre of the first pole tooth when yoke portion contact surfaces of the first and second core members are in contact to form the first pole tooth;
on one side, said first and second core members are laminated so that respective tooth portions are aligned and said laminated first and second core members are connected in said lamination direction, and on the other side, said first and second core members to be a pair with said laminated first and second core members are laminated so that respective tooth portions are aligned and said laminated first and second core members are connected in said lamination direction;
and said first and second core members on both sides are constructed to be connected so that the yoke portions of different heights are in contact; and
said first and second pole teeth are disposed in order along said motor driving direction and secured onto a fixing member by means of a screw passing through the hole or a mold filling the hole while engaging the engaging portion of said first pole tooth with the joint portion of said second pole tooth.

According to the mentioned inventions, with the use of the first pole tooth of the same construction, both single-sided linear motor and double-sided linear motor can be formed. Furthermore, the adjacent pole teeth can be easily connected by such a simple method as sliding the first pole tooth, resulting in an advantage of improvement in productivity. Further, since the adjacent teeth are connected by engagement, even in the case of being rigidly fixed by, e.g., fastening with screws, the number of screws can be decreased resulting in improvement in productivity.

The foregoing and other objects, features, aspects and advantages of the present invention will become more apparent from the following detailed description when read in conjunction with the accompanying drawings.

### BRIEF DESCRIPTION OF THE DRAWINGS

Figs. 1A and 1B are a front sectional view and a sectional view taken along the line X-X illustrating a double-sided linear motor according to a first preferred embodiment of the present invention.
Figs. 2A-2D are views each illustrating pole teeth (a first pole tooth, a second pole tooth, and a third pole tooth) according to the first embodiment of the invention.
Fig. 3 is a view illustrating pole teeth (the first pole tooth) of another example according to the first embodiment of the invention.
Figs. 4A and 4B are views each explaining a method of manufacturing the first pole tooth according to the first embodiment of the invention, and in which Fig. 4A is a plan view and Fig. 4B is a side view.
Figs. 5A and 5B are views each explaining a method of connecting an armature core of Figs. 4A and 4B in a lamination direction by caulking, and in which Fig. 5A is a plan view and Fig. 5B is a sectional view taken along the line XI-XI of Fig. 5A.
Fig. 6 is a sectional view explaining another lamination state different from the lamination state of Figs. 4B and 5B.
Figs. 7A and 7B are views each explaining a method of applying winding to the split cores of Fig. 5A.
Figs. 8A and 8B are views each explaining a method of assembling the linear motor of Figs. 1A and 1B.
Figs. 9A and 9B are views each illustrating a construction of a single-sided linear motor according to the first embodiment of the invention, and in which Fig. 9A is a sectional view and Fig. 9B is a sectional view taken along the line XII-XII of Fig. 9A.
Figs. 10A and 10B are views each illustrating the pole teeth of Figs. 9A and 9B, and in which Fig. 10A is a plan view of the second pole tooth and Fig. 10B is a plan view of the third pole tooth.
Figs. 11A-11C are plan views each illustrating pole teeth according to a second embodiment of this invention, and in which Fig. 11A is a plan view of the first pole tooth, Fig. 11B is a plan view of the second pole tooth, and Fig. 11C is a plan view of the third pole tooth.
Figs. 12A and 12B are views each explaining a method of applying winding to the split cores of Fig. 11A.
Figs. 13A and 13B are views each explaining a method of assembling a double-sided linear motor according to a second embodiment of the invention.
Figs. 14A-14C are diagrams each illustrating another pole teeth according to the second embodiment of this invention, and in which Fig. 14A is a plan view of the first pole tooth, Fig. 14B is a plan view of the second pole tooth, and Fig. 14C is a plan view of the third pole tooth.
Figs. 15A and 15B are views each explaining a method of assembling the first pole tooth and the second pole tooth of Figs. 14A and 14B.
Figs. 16A-16C are views each illustrating pole teeth according to a third embodiment of the invention, and in which Fig. 16A is a plan view of the first pole tooth, Fig. 16B is a plan view of the second pole tooth, and Fig. 16C is a plan view of the third pole tooth.
Fig. 17 is a view explaining a method of applying winding to the second pole tooth of Fig. 16B.
Figs. 18A and 18B are views each explaining a method of assembling the first pole tooth and the second pole tooth of Figs. 16A and 16B.
Fig. 19 is a sectional view illustrating an armature of a double-sided linear motor according to a third embodiment of the invention.
Figs. 20A-20C are diagrams each illustrating another pole teeth according to the third embodiment of this invention, and in which Fig. 20A is a plan view illustrating the first pole tooth, Fig. 20B is a plan view of the second pole tooth, and Fig. 20C is a plan view of the third pole tooth.
Fig. 21 is a view explaining a method of applying winding to the second pole tooth of Fig. 20B.
Figs. 22A and 22B are views each explaining a method of assembling the first pole tooth and the second pole tooth of Figs. 20A and 20B.
Fig. 23 is a sectional view illustrating an armature of another double-sided linear motor according to the third embodiment of the invention.
Fig. 24 is a sectional view illustrating construction of a double-sided linear motor according to a fourth embodiment of the invention.
Figs. 25A and 25B are views each illustrating pole teeth of Fig. 24, and in which Fig. 25A is a plan view of the first pole tooth, and Fig. 25B is a plan view of the second pole tooth.
Fig. 26 is a sectional view illustrating construction of an armature of the double-sided linear motor according to the fourth embodiment of the invention.
Fig. 27 is a sectional view illustrating construction of a double-sided linear motor according to a fifth embodiment of the invention.
Fig. 28 is a sectional view illustrating construction of another double-sided linear motor according to the fifth embodiment of the invention.
Fig. 29 is a plan view illustrating a shape of the second pole tooth according to the fifth embodiment of the invention.
Figs. 30A and 30B are views each explaining a method of manufacturing the second pole tooth according to the fifth embodiment of the invention.
Figs. 31A-31C are views each explaining a method of manufacturing the second pole tooth according to the fifth embodiment of the invention.
Fig. 32 is a sectional view illustrating a double-sided linear motor manufactured using the second pole tooth of Figs. 31A-31C.
Figs. 33A and 33B are diagrams each explaining a method of manufacturing the second pole tooth according to the fifth embodiment of the invention.
Fig. 34 is a sectional view illustrating a single-sided linear motor manufactured using the second pole tooth of Figs. 33A and 33B.
Fig. 35 is a sectional view illustrating another double-sided linear motor according to the fifth embodiment of the invention.
Figs. 36A and 36B are diagrams each explaining the method of manufacturing another second pole tooth according to the fifth embodiment of the invention.
Fig. 37 is a sectional view illustrating a double-sided linear motor manufactured using the second pole tooth of Figs. 36A and 36B.
Fig. 38 is a sectional view illustrating a double-sided linear motor according to a sixth embodiment of the invention.
Figs. 39A-39C are views each explaining a method of manufacturing the second pole tooth of Fig. 38 and the advantage thereof.
Figs. 40A-40C are views each explaining the method of manufacturing another second pole tooth according to the sixth embodiment of the invention and the advantage thereof.

### DESCRIPTION OF THE PREFERRED EMBODIMENTS

The invention is now described in detail with reference to preferred embodiments thereof which are illustrated in the accompanying drawings.

### Embodiment 1.

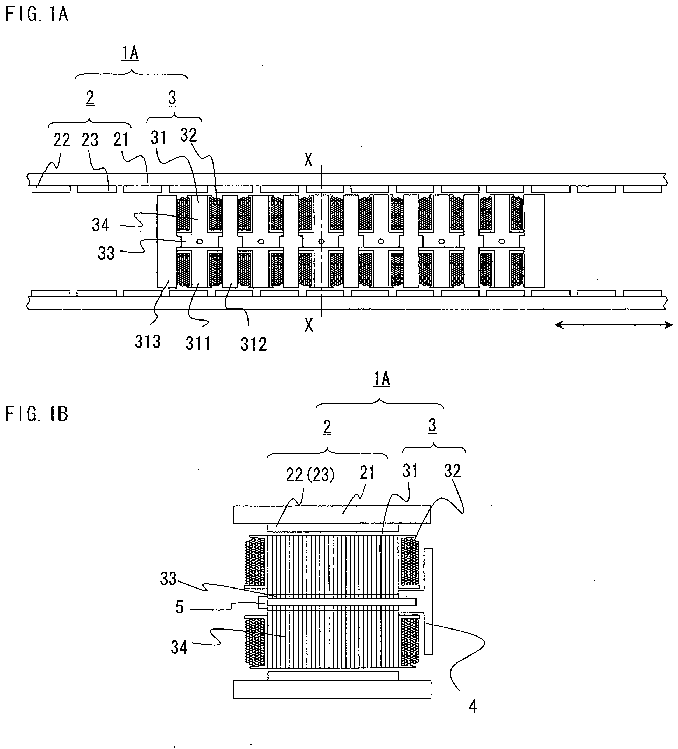

Figs. 1A and 1B are views each illustrating a linear motor of double-sided type 1A according to a first preferred embodiment of the present invention. Fig. 1A is a front sectional view, and Fig. 1B is a sectional view taken along the line X-X of the linear motor 1A of Fig. 1A.

With reference to Figs. 1A and 1B, a field part 2 is formed of a plate-like field yoke 21 extending in two rows along the motor driving direction (in the drawing, in the direction indicated by the right and left arrow), and a plurality of permanent magnets 22 and 23 disposed at predetermined intervals along the motor driving direction on this field yoke 21 and having alternately different polarities. An armature 3 is formed of a plurality of pole teeth 31 that is disposed between two rows of permanent magnets of the field part 2 via a predetermined space and that is disposed in order along the motor driving direction, and a driving coil 32 wound around the pole teeth 31. The pole tooth 31 is formed of a yoke portion 33 positioned at the central portion between two rows of permanent magnets of the field part 2 and coming in contact with an adjacent pole tooth 31, and a tooth portion 34 formed to protrude on both sides opposite to the two rows of permanent magnets from the yoke portion 33. Further, this pole tooth 31 is provided with a first pole tooth 311, second pole tooth 312 disposed adjacent to the first pole tooth, and third pole tooth 313 disposed on both ends. In addition, only the first pole tooth 311 is wound with the driving coil 32, and the second pole tooth 312 and third pole tooth 313 are wound with no driving coil 32.

In such construction, the first pole tooth 311 wound with the driving coil 32 functions as a main pole tooth, and the second pole tooth 312 that is wound with no driving coil 32 functions as a commutating-pole tooth for suppressing cogging or torque ripple. Furthermore, the third pole tooth 313 functions as a commutating-pole tooth reducing end cogging. In addition, the pole tooth 31 (the first pole tooth 311, the second pole tooth 312 and the third pole tooth 313) is formed by punching a flat-rolled magnetic steel sheets with a press and laminating them, and thereafter connecting these laminated steels each other by, e.g., caulking.

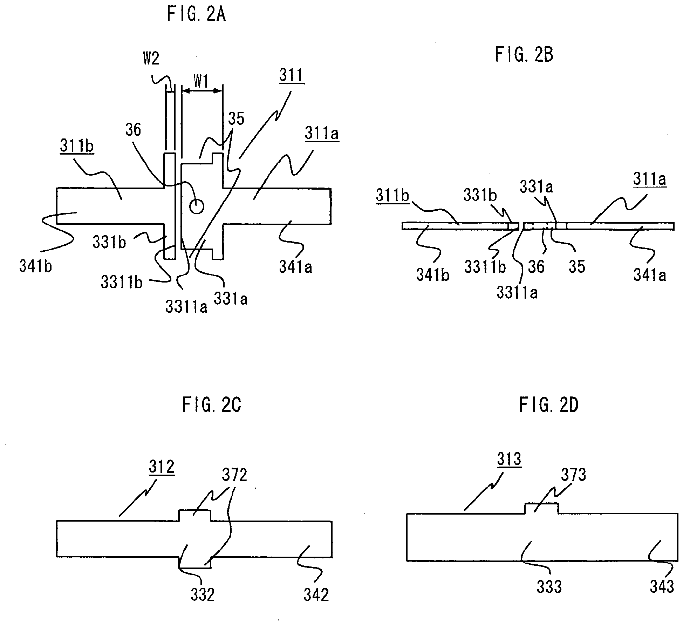

The first pole tooth 311, as illustrated in Figs. 2A and 2B, is formed of a first core member 311a and a second core member 311b. The first core member 311a is formed of a yoke portion 331a having a height W1 (W1≧ 0) and a tooth portion 341a formed to protrude from the yoke portion 331a in the right-hand direction in the drawing, and is provided with an engaging portion 35 formed by being cut at an end face on both upper and lower sides in the drawing of the yoke portion 331a. The second core member 311b is formed of a yoke portion 331b having a height W2 (W2≧0), and a tooth portion 341b formed to protrude in the left-hand direction in the drawing from the yoke portion 331b. Further the heights W1 and W2 of the first and second core members 311a and 311b are set to be W1≠W2. Moreover, a hole 36 is formed in the yoke portion 331a of the first core member 311a so as to be positioned at the center of the first pole tooth 311 when yoke portion contact surfaces 3311a and 3311b of the first and second core members 311a and 311b are in contact to form the first pole tooth 311.

The second pole tooth 312, as illustrated in Fig. 2C, is formed of a yoke portion 332 positioned at the central portion, and a tooth portion 342 formed to protrude on both left and right sides in the drawing from the yoke portion 332. This second pole tooth 312 is provided with a joint portion 372 formed to protrude from the end face on both upper and lower sides in the drawing of the yoke portion 332, and functioning to engage with the engaging portion 35 of the first pole tooth 311.

The third pole tooth 313, as illustrated in Fig. 2D, is formed of a yoke portion 333 positioned at the central portion, and a tooth portion 343 formed to protrude on both right and left sides in the drawing from the yoke portion 333. This third pole tooth 313 is provided with a joint portion 373 formed to protrude from the end face on the upper side in the drawing of the yoke portion 333, and functioning to engage with the engaging portion 35 of the first pole tooth 311.

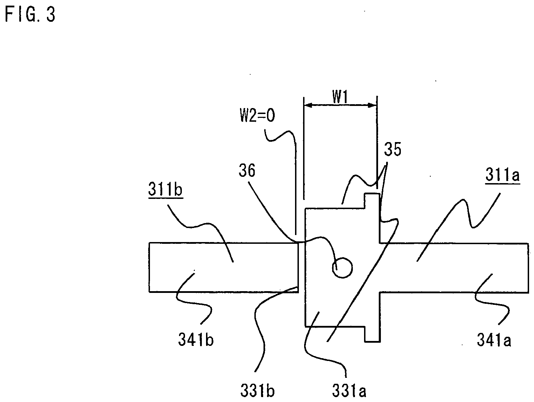

In addition, as illustrated in Fig. 3, in the first pole tooth 311, the height W2 of the yoke portion 331b of the second core member 311b may be zero. That is, the second core member 311b may be provided with no yoke portion 331b of a smaller yoke portion height, and formed of only the tooth portion 341b.

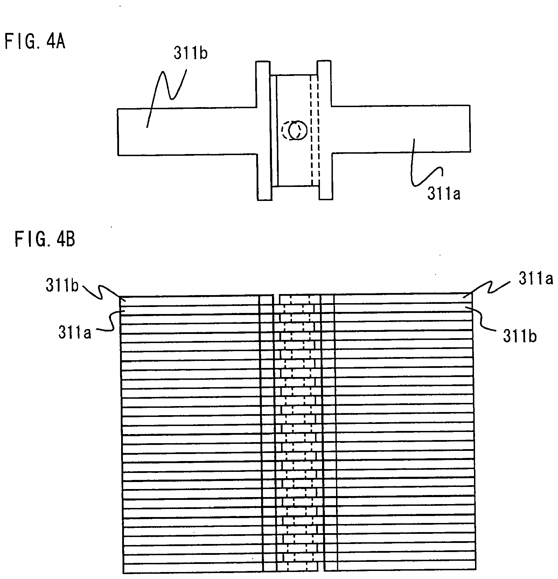

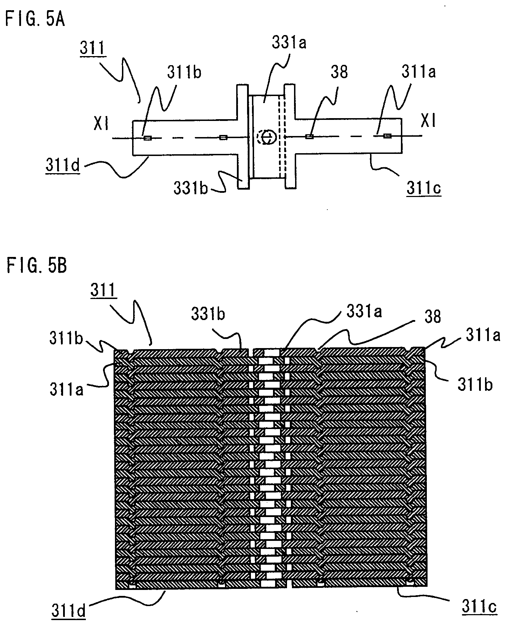

Now, a method of forming the first pole tooth 311 using the first and second core members 311a and 311b is described. Figs. 4A and 4B are views each illustrating a state that these two kinds of the first and second core members 311a and 311b are laminated. Fig. 4A is a plan view, and Fig. 4B is a side view. Further, Figs. 5A and 5B are views each illustrating a state that the laminate sheets of the core members 311a and 311b are connected by caulking. Fig. 5A is a plan view, and Fig. 5B is a sectional view taken along the line XI-XI of Fig. 5A.

As illustrated in Figs. 4A and 4B, two kinds of the first and second core members 311a and 311b are so stacked alternately that is , for example, in the uppermost layer, the first core member 311a is disposed on the right side in the drawing and the second core member 311b is disposed on the left side in the drawing, and in the next second layer, the first core member 311a is disposed in the left side in the drawing and the second core member 311b is disposed in the right side in the drawing. Then, as illustrated in Fig. 5B, in the state that the first and second core members 311a and 311b of Figs. 4A and 4B are stacked, the core members 311a and 311b laminated on the right side and on the left side are connected in a lamination direction thereof by caulking 38 to obtain a first split core 311c and a second split core 311d. At this time, by making a joining operation with caulking 38 in the state that a part or the whole of the yoke portions 331a are overlapped in the lamination direction, even in the case where any pressure is applied in, e.g., a press at the time of joining with calking 38, the end portion of the yoke portion 331a of the first core member 311a is not bent, resulting in improvement in assembly workability.

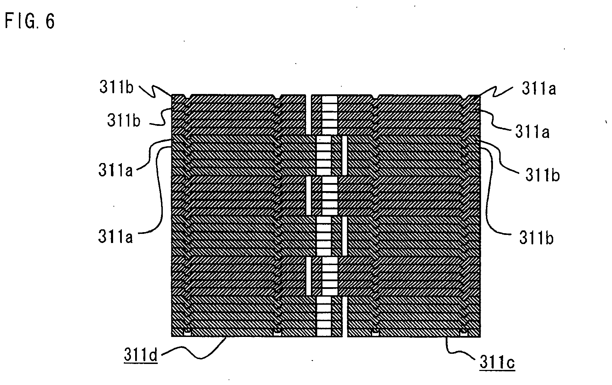

In addition, the number, the shape and the like of the caulking 38 are not limited to those of Figs. 5A and 5B. Moreover, as to the lamination method of the first and second core members 311a and 311b, although in Figs. 4B and 5B, the first and second core members 311a and 311b are stacked alternately with laterally changed in each layer, as is divided into (n=) six sections in the lamination direction as illustrated in Fig. 6, the ones that are laminated in the same direction in the dimension of 1/n (n is an integer of n ≧ 2) of a core laminate thickness may be structured to be stacked in a core laminate thickness alternately with changed in the lateral direction. Furthermore, these directions are not necessarily changed in each laminate of the same number of core members, but the lateral directions may be changed in each laminate of different numbers of core members.

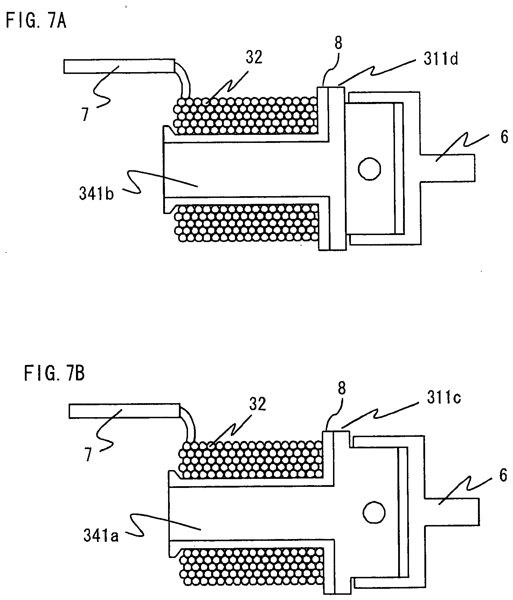

Now, a method of preparing an armature 3 using the first pole tooth 311 manufactured in Figs. 5A and 5B is described. In this method, the first pole teeth 311 of Figs. 5A and 5B is once divided into both left and right sides, and then as illustrated in Figs. 7A and 7B, the first split core 311c and the second split core 311d are wound with a driving coil 32 separately. That is, one of the split cores 311c and 311d on both left and right sides of the first pole tooth 311 is secured to a core gripper 6 of a winding equipment on an individual basis, and the driving coil 32 is wound around each of the tooth portions 341b and 341a with a nozzle 7. Accordingly, winding can be made in a high density with simple equipment.

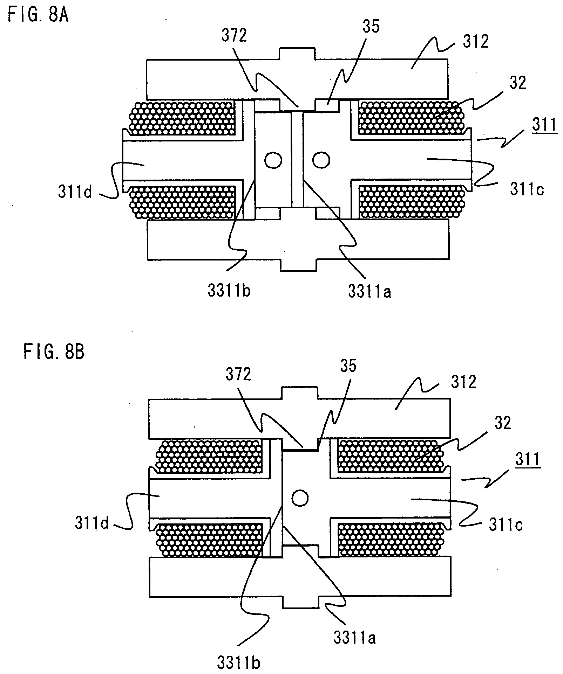

Then, as illustrated in Figs. 8A and 8B, the split cores 311c and 311d wound with the driving coil 32 are disposed on both right and left sides so that the yoke portion contact surfaces 3311a and 3311b thereof are in opposition, and the second pole tooth 312 or third pole tooth 313 (the second teeth 312 in Figs. 8A and 8B) adjacent to the first pole tooth 311 is disposed on both upper and lower sides. Subsequently, the split cores 311c and 311d on both right and left sides are slid until the yoke portion contact surfaces 3311a and 3311b come in contact, and then the joint portions 372, 373 provided at the second pole tooth 312 or the third pole tooth 313 is engaged and connected with the engaging portion 35 provided at the first pole tooth 311. Thereafter, as illustrated in Figs. 1A and 1B, a plurality of pole teeth 31, while being connected in order, are disposed on a fixing member 4 with aligned in a row, and the hole 36 formed in the first core member 311a is fastened and secured to the fixing member 4 with a screw 5 to make up a double-sided linear motor 1A.

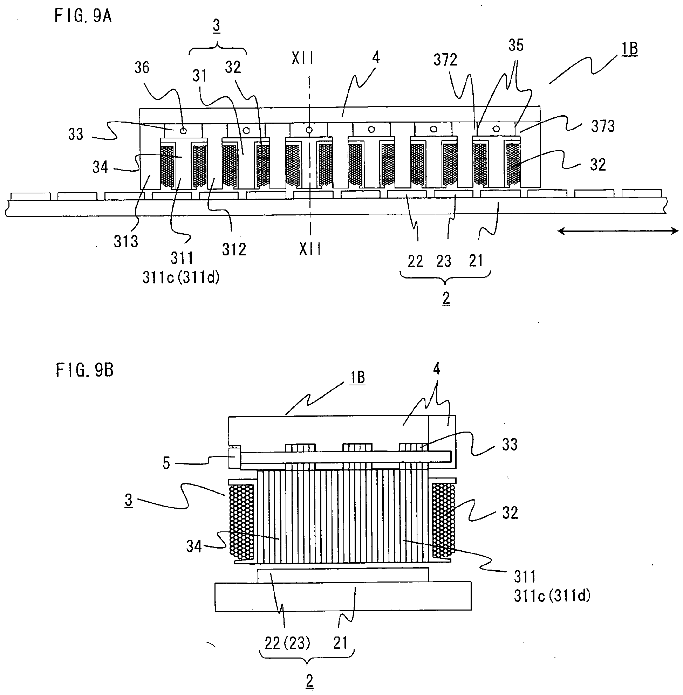

Fig. 9A is a plan view of a single-sided linear motor 1B according to the first embodiment of the invention, and Fig. 9B is a sectional view taken along the line XII-XII of the linear motor 1B of Fig. 9A. The linear motor 1B is constructed of a field part 2 in which a plurality of permanent magnets 22 and 23 are aligned in a row so that adjacent polarities thereof are different and fixed to a field yoke 21, and an armature 3 disposed opposite to those permanent magnets 22 and 23 via a predetermined space. A pole tooth 31 forming the armature 3 is constructed of a yoke portion 33 that is positioned on the back side of the face opposite to the field part 2 and comes in contact with an adjacent pole tooth 31, and a tooth portion 34 formed to protrude from this yoke portion 33 so as to be opposed to the permanent magnets 22 and 23. The pole teeth 31 is provided with a first pole tooth 311, a second pole tooth 312 disposed adjacent to the first pole tooth 311, and a third pole tooth 313 disposed on both ends. In addition, only the first pole tooth 311 is wound with the driving coil 32, and the second pole tooth 312 and third pole tooth 313 are wound with no driving coil 32. In such construction, the first pole tooth 311 wound with the driving coil 32 functions as a main pole tooth, and the second pole tooth 312 wound with no driving coil 32 functions as a commutating-pole tooth for suppressing cogging or torque ripple. Furthermore, the third pole tooth 313 functions as a commutating-pole tooth reducing end cogging. In addition, the pole tooth 31 (the first pole tooth 311, the second pole tooth 312 and the third pole tooth 313) is formed by punching a flat-rolled magnetic steel sheets with a press and laminating them, and thereafter connecting these lamination steels each other with, e.g., caulking.

Furthermore, the first pole tooth 311 is obtained by being divided into the split cores 311a and 311d on both right and left sides to align them as illustrated in Fig. 6. Moreover, although the single-sided linear motor according to this first embodiment employs the split cores illustrated in Fig. 6, it is not limited to these split cores. For example, it is preferable that split cores illustrated in Fig. 5B are divided into both right and left sides and aligned.

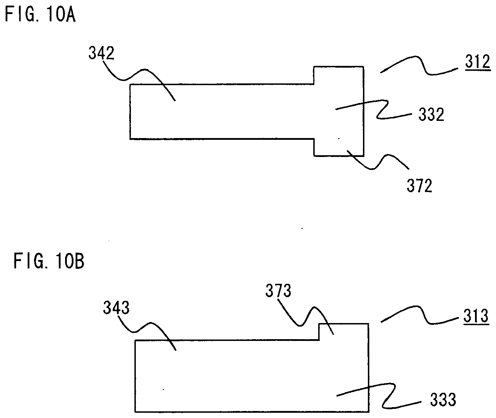

The second pole tooth 312, as illustrated in Fig. 10A, is formed of a yoke portion 332 positioned at right in the drawing, and a tooth portion 342 formed to protrude to the left from the yoke portion 332. The second pole tooth 312 is provided with a joint portion 372 formed to protrude from the end face on both upper and lower sides of the yoke portion 332, and functioning to engage with an engaging portion 35 of the first pole tooth 311.

The third pole tooth 313, as illustrated in Fig. 10B, is formed of a yoke portion 333 positioned at right in the drawing, and a tooth portion 343 formed to protrude to the left from the yoke portion 333. The third pole tooth 313 is provided with a joint portion 373 formed to protrude from the end face on the upper side of the yoke portion 333, and functioning to engage with the engaging portion 35 of the first pole tooth 311.

Further, as illustrated in Figs. 9A and 9B, the pole teeth 31 are aligned in order in a row to be disposed on a fixing member 4, while engaging and connecting the joint portions 372, 373 provided at the second pole tooth 312 or the third pole tooth 313 with the engaging portion 35 provided at the first pole tooth 311. Further, the hole 36 formed in the first core member 311a is fastened and secured to the fixing member 4 with a screw 5 to construct a single-sided linear motor 1B.

Additionally, in the above-mentioned double-sided linear motor 1A and single-sided linear motor 1B, it is preferable that either of the armature 3 and the field part 2 may act as a rotor or a stator, thus enabling to make an arbitrary selection. Furthermore, items other than those mentioned above, for example, the number of turns or the pitch of a driving coil 32, the structure of a field part 2 and the like are not limited at all.

Furthermore, although the pole teeth 31 and the fixing member 4 are secured together by fastening with screws 5 in the above-described arrangement, it is preferable that the holes 36 are filled with, e.g., a mold, thereby being fastened and fixed.

As described above, according to this first embodiment, both double-sided linear motor 1A and single-sided linear motor 1B can be formed using the split cores 311c and 311d, and pole teeth dedicated for respective double-sided and single-sided linear motors need not to be manufactured separately, thus improving productivity. In addition, when winding is applied to the first pole tooth 311, any winding equipment of the simple and easy nozzle 7 layout and core gripper 6 can be employed. Thus, winding can be made using inexpensive equipment by the method of high workability.

In addition, in the process of connecting adjacent pole teeth 31, connection can be easily made by such a simple method as engaging the engaging portion 35 and the joint portions 372 and 373 with each other by sliding the split cores 311c and 311d, resulting in good assembly.

Furthermore, since caulking is made by means of, e.g., a press in the state that the yoke portions 331a and 331b of the first and second core members 311a and 311b are overlapped, there is no bend at the end face of the yoke portions 331a and 331b of the core members 311a and 311b. Consequently, manufacturing can be made with high accuracy, and higher assembly workability will be ensured.

### Embodiment 2.

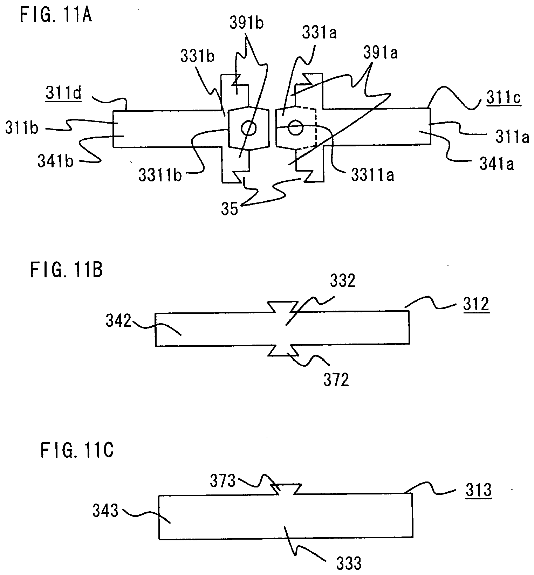

Figs. 11A-11C are plan views each illustrating a pole tooth 31 according to a second embodiment of this invention. As illustrated in Fig. 11A, a notch 391a is formed at the upper and lower corner portions of a yoke portion 331a of the first core member 311a. Further, a protrusion 391b to be in contact with the notch 391a is formed at the upper and lower corner portions of a yoke portion 331b of the second core member 311b. Therefore, when the first split core 311c and the second split core 311d are assembled, the yoke portions 331a and 331b are arranged to position each other. Furthermore, the contact guide faces of each the notch 391a and the protrusion 391b (both side faces of the yoke portion contact surfaces 3311a and 3311b in the drawing) are formed to be taper-shaped, thus making it easy to assemble the split cores at left and right.

Further, an engaging portion 35 of a dovetail groove is formed at each of the yoke portions 331a and 331b of the first pole tooth 311. There are formed at yoke portions 332 and 333 of the second and the third pole teeth 312 and 313, as illustrated in Figs. 11B and 11C, joint portions 372 and 373 formed so as to engage with the engaging portion 35. Other constructions thereof are the same as in the foregoing first embodiment.

Now, a method of manufacturing an armature 3 using the pole tooth 31 according to this second embodiment is described. As to winding of a driving coil 32, it is certain that in the same manner as in the foregoing first embodiment, the split cores 311c and 311d are arranged being divided on both left and right sides, and separately applied with winding respectively. But in the second embodiment, a winding method without being divided is hereinafter described.

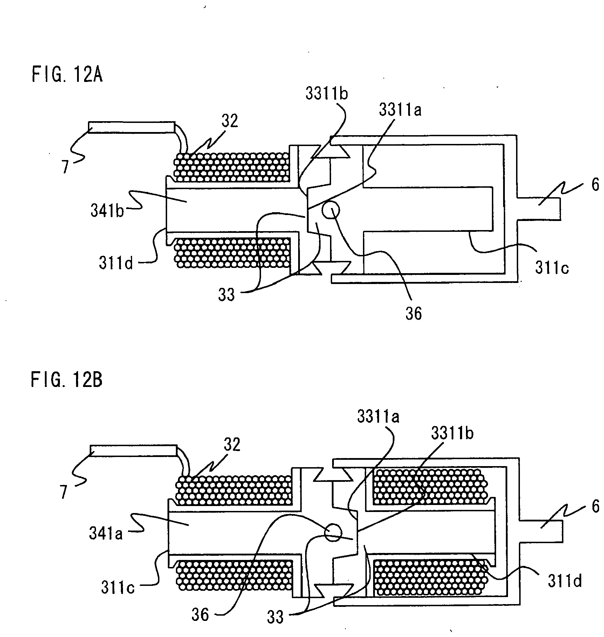

First, as illustrated in Fig. 12A, in the state that both contact surfaces 3311a and 3311b of the yoke portions 33 of the split cores 311c and 311d on both right and left sides are in contact and connected, the yoke portion 33 is chucked with a core gripper 6 so that the tooth portion 341b on one side is exposed. Furthermore, using a nozzle 7, a driving coil 32 is wound around the tooth portion 341b on one side. After winding of the tooth portion 341b on one side has been ended, as illustrated in Fig. 12B, the yoke portion 33 is chucked with the core gripper 6 so that the tooth portion 341a on the other side is exposed, and with the nozzle 7, the driving coil 32 is wound around the tooth portion 341a on the other side, thus winding with the driving coil 32.

Moreover, the yoke portion 33 is chucked in the state that the tooth portions 341a and 341b on both sides are exposed, and a nozzle 7 is provided on both sides, thus enabling to make winding at a time. In these winding methods, since the split cores 311c and 311d at left and right need not to be assembled after the coil winding, such problem as worse assembly workability, e.g., in the case of the occurrence of deformation of the split cores 311c and 311d in coil winding, can be avoided.

In addition, the core gripper mechanism or the winding method is not limited to that described in this embodiment, but, for example, chucking can be made with the use of a hole 36 formed in the first pole tooth 311. Further, in the coil winding method, by applying winding in the state of being divided at left and right as in the foregoing first embodiment, winding can be applied with high workability using inexpensive equipment.

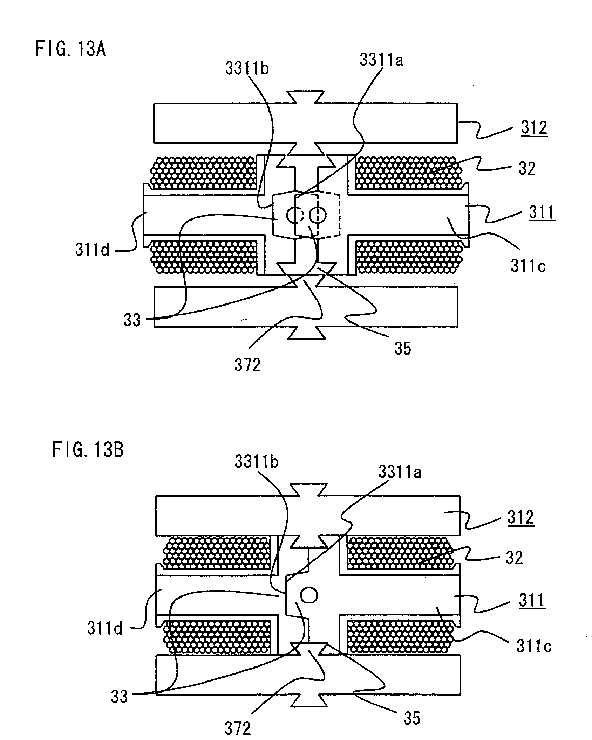

Then, the first pole tooth 311 wound with the driving coil 32 in this manner is slid both to the right and to the left in the drawing as illustrated in Figs. 13A and 13B, and the second pole tooth 312 or third pole tooth 313 adjacent to the first pole tooth 311 (the second pole tooth 312 in Figs. 13A and 13B) is disposed on both upper and lower sides in the drawing. Subsequently, the first core member 311c and second core member 311d on both right and left sides are slid until the yoke portion contact surfaces 3311a and 3311b come in contact, and thus the joint portions 372, 373 formed at the second pole tooth 312 or the third pole tooth 313 are engaged and in connect with the engaging portion 35 formed at the first pole tooth 311. Further, the first pole tooth 311 is slid with held in the state that the yoke portions 33 are overlapped in the lamination direction. Accordingly, the work of joining the yoke portions 33 divided on both sides again so as to be overlapped will become unnecessary. Then, in the same manner as in the foregoing first embodiment, a plurality of the pole teeth 31, while being connected in order, are disposed with aligned in a row on a fixing member 4, and the hole 36 formed in the first pole tooth 311 and the fixing member 4 are fastened and secured together with a screw 5 to construct a double-sided linear motor 1A.

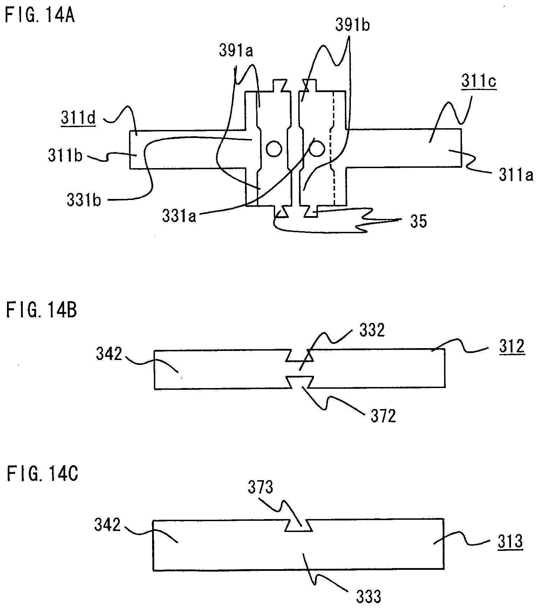

In addition, as illustrated in Figs. 14A-14C, it is preferable to be constructed such that a protrusion 391b is provided at the upper and lower corner portions of the yoke portion 331a of the first core member 311a, and a notch 391a formed to be in contact with the protrusion 391b is provided at the upper and lower corner portions of the yoke portion 331b of the second core member 311b, and thus, when the first split core 311c and the second split core 311d are assembled, the yoke portions 331a and 331b can be easily positioned. Furthermore, the number or the shape of the protrusion 391b and the notch 391a as illustrated in Figs. 11A-11C or Figs. 14A-14C is not limited to those in this second embodiment, but the number of the protrusion 391b and the notch 391a may be increased, and further the shape thereof may be rectangular, triangular, a circular arc-shaped or the like.

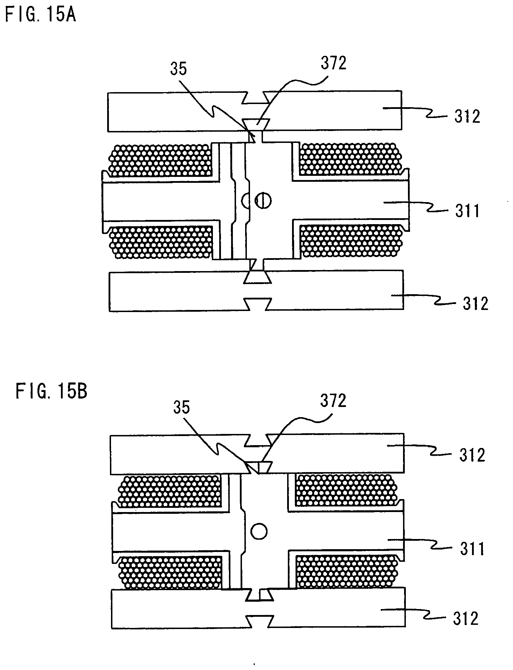

In addition, as illustrated in Figs. 14A-14C, it is preferable that a convex engaging portion 35 is provided at the first pole tooth 311, and that concave joint portions 372 and 373 are provided at the second pole tooth 312 and the third pole tooth 313. In this case, as illustrated in Figs. 15A and 15B, by sliding the first pole tooth 311 both to the right and to the left, the joint portions 372, 373 provided at the second pole tooth 312 or the third pole tooth 313 can be engaged and connected with the engaging portion 35 provided at the first pole tooth 311. In addition, the shape or the number of the engaging portion 35 and the joint portions 372 and 373 are not limited to the shapes illustrated in Figs. 8A, 8B, 13A, 13B, 15A and 15B.

As described above, according to this second embodiment, since the notch and protrusion 391a and 391b are formed at the upper and lower corner portions at the yoke portions 331a and 331b of two kinds of core members 311a and 311b, when the split cores 311c and 311d on both left and right sides are assembled, the core members 311a and 311b are easily positioned each other, resulting in improvement in assembly workability of a double-sided linear motor 1A. Furthermore, since the contact guide faces of each of the protrusion 391b and the notch 391a are constructed to be taper-shaped, when the split cores at left and right are assembled, the protrusion 391b and the notch 391a can be positioned without being caught in any other part, resulting in improvement in productivity. Moreover, even in the single-sided linear motor 1B, the notch and protrusion 391a and 391b can be utilized for positioning between the core members 311a and 311b and the fixing member 4, thus enabling to improve productivity.

Further, with such a simple work as sliding of the split cores 311c and 311d, the dovetail groove-shaped joint portions 372 and 373 can be engaged and connected with the engaging portion 35, so that a solid connection can be achieved without affecting workability, and thus displacement of the pole teeth 31 being prevented.

### Embodiment 3.

In the foregoing first and second embodiments, only the first pole tooth 311 is wound with a driving coil 32, and the second pole tooth 312 and the third pole tooth 313 are wound with no driving coil 32. Further, the second pole tooth 312 or the third pole tooth 313 is disposed so as to be adjacent to the first pole tooth 311; the split cores 311c and 311d on both left and right sides of the first pole tooth 311 are slid until the yoke portion contact surfaces 3311a and 3311b thereof come in contact; and the joint portions 372, 373 provided at the second pole tooth 312 or the third pole tooth 313 are engaged and connected with the engaging portion 35 provided at the first pole tooth 311. Thereafter, a plurality of the pole teeth 31, while being connected in order, are disposed on a fixing member 4 with aligned in a row, and the hole 36 formed in the first core member 311a and the fixing member 4 are fastened and secured together with a screw 5 to manufacture a double-sided linear motor 1A.

In such construction, since the pole teeth applied with winding are slid and connected, there is a possibility that they are hard to slide to the left and to the right in the case of occurrence of getting tight at the core due to the application of winding.

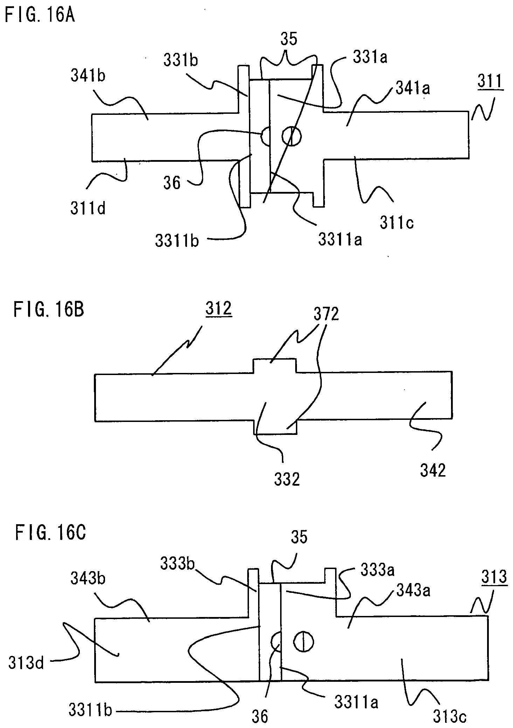

Thus, in this third embodiment, as illustrated in Figs. 16A-16C, the first pole tooth 311 and the second pole tooth 312 are constructed to be of the same shape as in the first embodiment; and the third pole tooth 313, as illustrated in Fig. 16C, is constructed to be divided into a first split core 313c and a second split core 313d at left and right in the same manner as in the first pole tooth of Fig. 16A. Furthermore, a yoke portion of the third pole tooth 313 is constructed not to extend to one side (lower side in the drawing) and to be straight with respect to tooth portions 343a, 343b.

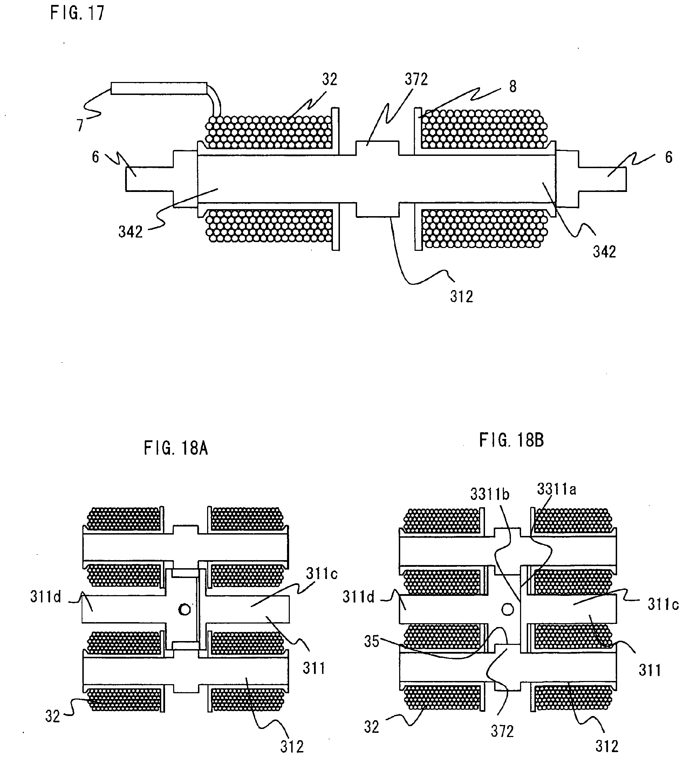

Moreover, according to this third embodiment, as illustrated in Fig. 17, a driving coil 32 is wound via an insulator 8 only around the tooth portions 342 of the second pole tooth 312. At this time, as in the second embodiment, the tooth portion on one side may be applied with winding, and thereafter, with the direction changed, the tooth portion on the other side may be wound with a driving coil. With reference to Fig. 17, however, the tooth portions 342 are wound with the driving coil 32 by means of a nozzle 7 in the state that ends on both sides of the tooth portions 342 of the second pole tooth 312 are gripped by two core grippers 6. In such construction, any core gripper needs not to be replaced, resulting in increase of productivity. Furthermore, it is preferable that a hole is formed at the central portion of the second pole tooth 312, and the second pole tooth 312 is gripped making use of the hole to apply winding.

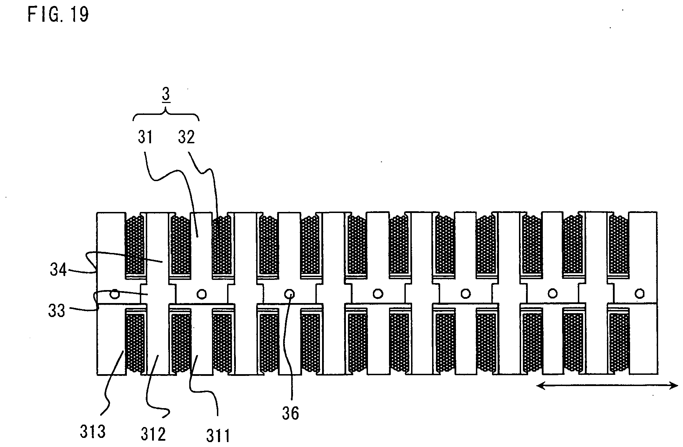

The second pole tooth 312 thus wound with the driving coil 32 is disposed on both upper and lower sides (only on one side in the case of the third pole tooth 313) of the first pole tooth 311 or third pole tooth 313 (the first pole tooth 311 in Figs. 18A and 18B) adjacent to the second pole tooth 312, as illustrated in Fig. 18A; then, in the state that the split cores 311c and 311d on both left and right sides of the first pole tooth 311 are spaced apart a little, respective pole teeth are brought in contact; as illustrated in Fig. 18B, the split cores 311c and 311d on both left and right sides of the first pole tooth 311 are slid until the yoke portion contact surfaces 3311a and 3311b thereof come in contact; thus the joint portion 372 provided at the second pole tooth 312 is engaged and connected with the engaging portion 35 provided at the first pole tooth 311. Thereafter, as illustrated in Fig. 19, a plurality of pole teeth 31 are disposed on a fixing member 4 with aligned in a row while being connected in order, and the hole 36 formed in the first pole tooth and the third pole tooth and the fixing member 4 are fastened and secured together with a screw to construct an armature 3 of a double-sided linear motor.

Owing to such construction, since the pole teeth can be connected and secured by sliding the first pole tooth 311 and the third pole tooth 313 wound with no driving coil 32, even in the case of occurrence of getting tight at the second pole tooth 312, there is no negative affection on the connection by sliding, thus enabling to provide a linear motor of high productivity.

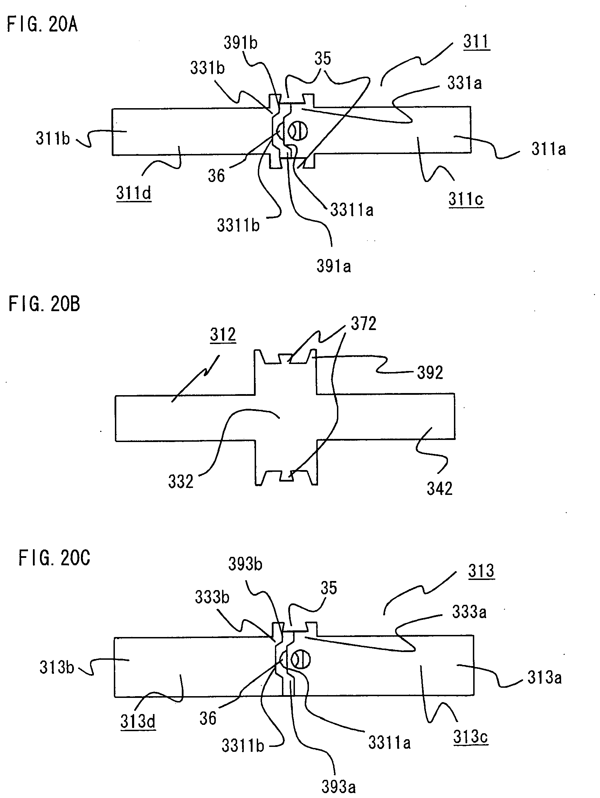

Additionally, the shape of pole teeth is not limited to this example, and now another example according to this third embodiment is described with reference to Figs. 20A to 23.

As illustrated in Fig. 20B, a yoke portion 332 of the second pole tooth 312 is formed to be wider in both lateral and vertical directions as compared with the second pole tooth illustrated in Fig. 16B, and the yoke portion 332 is provided with a wall 392 for winding at the upper and lower ends at left and right in the drawing. Furthermore, as illustrated in Fig. 20A, in the same manner as in the foregoing second embodiment, a notch 391a is provided at the upper and lower corner portions of a yoke portion 331a of the first core member 311a forming the first pole tooth 311, and a protrusion 391b is provided at the upper and lower corner portions of a yoke portion 331b of the second core member 311b so as to be in contact with the notch 391a. Therefore, when the first split core 311c and the second split core 311d are assembled, the yoke portions 331a and 331b can be positioned easily with each other. Moreover, the contact guide faces of each of the notch 391a and the protrusion 391b (both side faces of the yoke portion contact surfaces 3311a and 3311b in the drawing) are constructed to be taper-shaped, thus making it easy to assemble the split cores at left and right. In addition, an engaging portion 35 of dovetail groove shape is formed at the yoke portions 331a and 331b of the first pole tooth 311, and, as illustrated in Fig. 20B, a joint portion 372 formed to be engaged with the engaging portion 35 is provided at the yoke portion 332 of the second pole tooth 312. Further, as illustrated in Fig. 20C, the third pole tooth is constructed to be straight on the side not adjacent to the second pole tooth 312 (lower side in the drawing) at the yoke portions 333a and 333b, and the other construction thereof is the same as the first pole tooth 311.

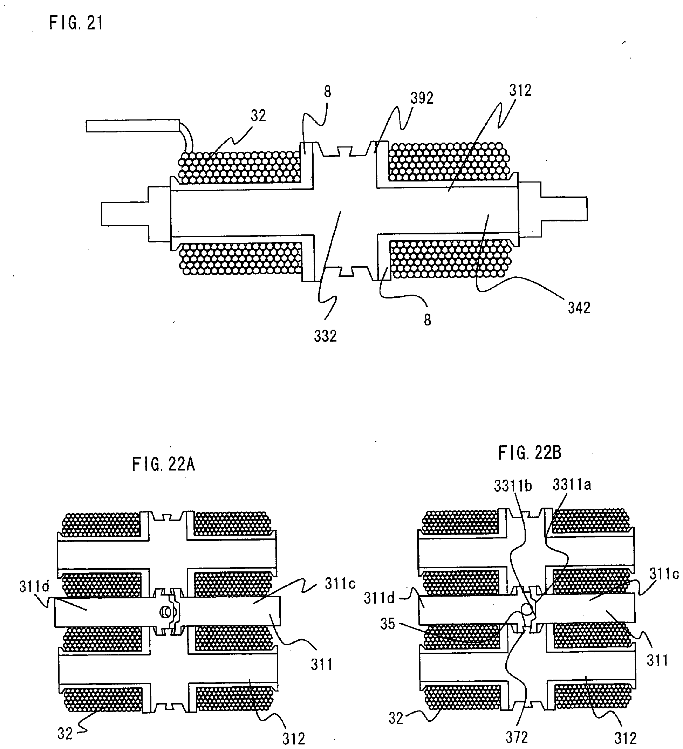

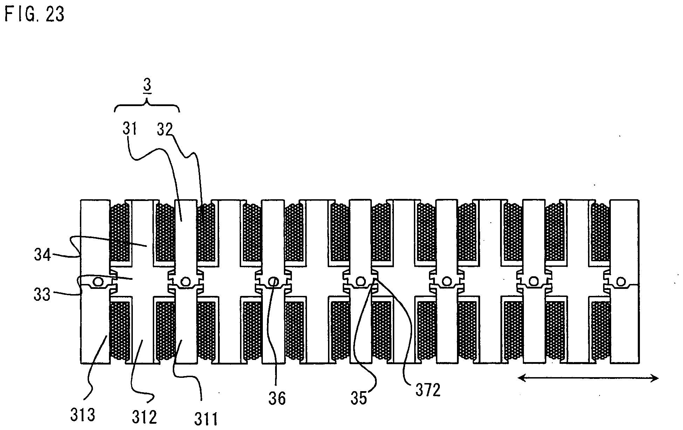

Now, as illustrated in Fig. 21, only the second pole tooth 312 is wound with the driving coil 32. Then, as illustrated in Fig. 22A, the second pole tooth 312 is disposed on both upper and lower sides (only on one side in the case of the third pole tooth 313) of the first pole tooth 311 or third pole tooth 313 (the first pole tooth 311 in Figs. 22A and 22B) adjacent to the second pole tooth 312; then, in the state that the split cores 311c and 311d on both left and right sides of the first pole tooth 311 are spaced apart a little, respective pole teeth are brought in contact; as illustrated in Fig. 22B, the split cores 311c and 311d on both left and right side of the first pole tooth 311 are slid until the yoke portion contact surfaces 3311a and 3311b thereof come in contact; and thus the joint portion 372 provided at the second pole tooth 312 is engaged and connected with the engaging portion 35 provided at the first pole tooth 311. Thereafter, as illustrated in Fig. 23, a plurality of pole teeth 31, while being connected in order, are disposed on a fixing member 4 with aligned in a row, and the hole 36 formed in the first pole tooth 311 and the third pole tooth 313, and the fixing member 4 are fastened and secured together with a screw to form an armature 3 of a double-sided linear motor.

Owing to such construction, in comparison with the shape of Fig. 17, since when a driving coil 32 is wound as illustrated in Fig. 21, the yoke portion 332 and the wall for winding 392 of the second pole tooth 312 function as a support against the stress applied to an insulator 8 at the time of winding, such failure as damage of the insulator 8 or irregular winding of the driving coil 32 can be prevented. In addition, as illustrated in Figs. 22A, 22B and 23, due to the dovetail groove shape of joint portions, a solid connection can be achieved.

### Embodiment 4.

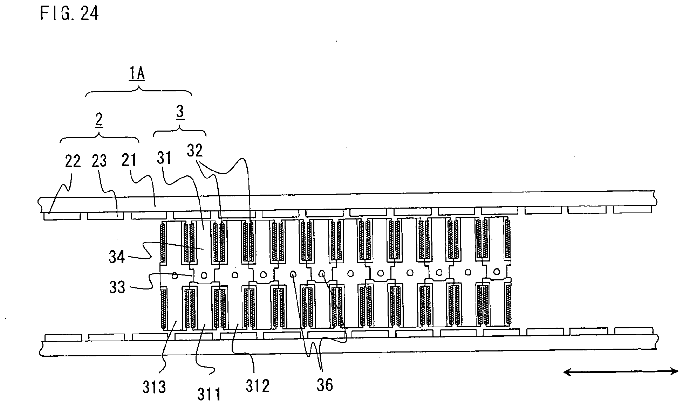

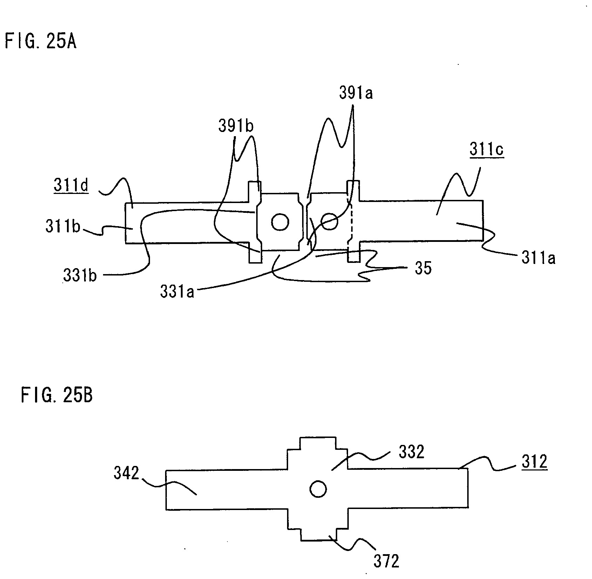

Fig. 24 is a plan view of a double-sided linear motor according to a fourth embodiment of the invention. Figs. 25A and 25B are a plan view illustrating a pole tooth 31 according to this fourth embodiment. As illustrated in Fig. 25A, a notch 391a is provided at the upper and lower corner portions of a yoke portion 331a of the first core member 311a, and a protrusion 391b formed to be in contact with the notch 391a is provided at the upper and lower corner portions of a yoke portion 331b of the second core member 311b. Therefore, when the first split core 311c and the second split core 311d are assembled, the yoke portions 331a and 331b are constructed to position easily each other. Furthermore, each of the notch 391a and the protrusion 391b are formed to be taper-shaped on the side to be in contact, thus making it easy to assemble the split cores at left and right.

Furthermore, there is provided an engaging portion 35 formed by being notched at the end face on both upper and lower sides at the yoke portion 331a of the first core member 311a. Further, as illustrated in Fig. 25B, a joint portion 372 formed to engage with the engaging portion 35 is provided at a yoke portion 332 of the second pole tooth 312a. Moreover, the yoke portion 332 of the second pole tooth 312 is wider in the motor driving direction (in the vertical direction of Fig. 25B) as compared with those in the foregoing first and second embodiments, to make winding at the second pole tooth 312 easy. In addition, as illustrated in Fig. 24, the third pole tooth 313 positioned at the left end of the armature 3 is so constructed as to be in shape of the joint portion 372 of the second pole tooth 312 of Fig. 25B being provided only on one side.

In an armature 3 according to this fourth embodiment, every pole teeth 31 is applied with winding. Regarding the manufacturing method of this armature 3, since the teeth of the second pole tooth 312 is not divided, it is necessary to apply winding by the method described in the second embodiment. The first pole tooth 311, however, in the same manner as in the first embodiment, two kinds of split cores 311c and 311d are applied with winding being divided separately, or as in the second embodiment, the first pole tooth 311 may not be divided but applied with winding as it is. In addition, in the armature 3 according to this fourth embodiment, every pole teeth 31 is provided with a hole 36 at the center of the yoke portion 33.

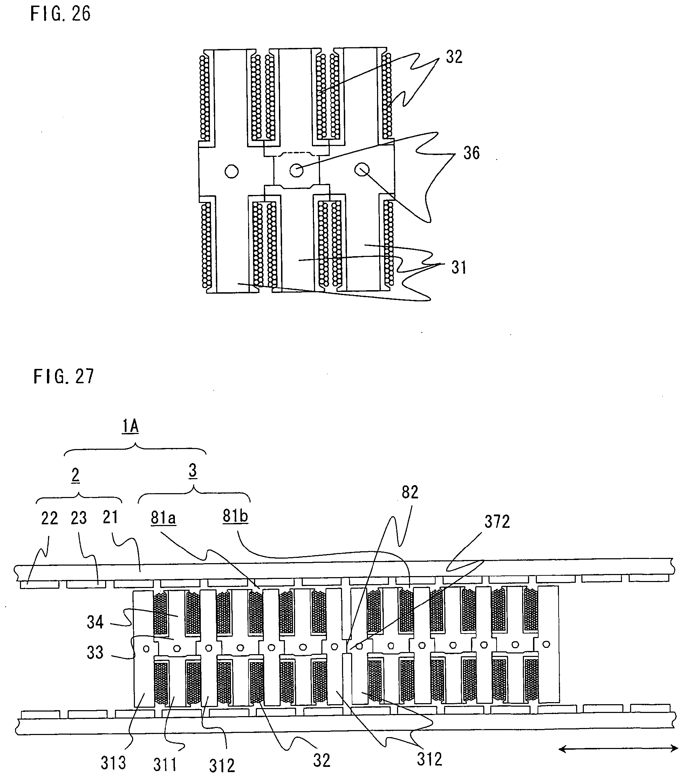

As described above, according to this fourth embodiment, on the supposition of a three-phase linear motor, in the foregoing first and second embodiments, three first pole tooth 311 are required, and additionally, each two second pole teeth 312 and third pole teeth 313 are required, so that the required number of pole teeth in the minimum unit is seven in total. On the other hand, in this fourth embodiment, the required number of pole teeth in the minimum unit, as illustrated in Fig. 26, can be three, thus enabling to increase thrust or variation of length dimension in the motor driving direction.

Furthermore, the hole 36 is formed in every pole teeth, so that when a screw 5 is put through all of the holes 36 and all these pole teeth are secured to a fastening member, the pole teeth can be secured more solidly. Moreover, even in the case where the holes 36 are filled with, e.g., a mold, owing to a larger number of holes 36, the pole teeth are fixed more solidly, thus enabling to improve reliability.

### Embodiment 5.

In conventional linear motors, an armature is constructed of a plurality of armature blocks, a gap element is provided between the armature blocks, and cogging thrusts generated at respective each armature blocks are made to have a phase difference to be cancelled each other, thereby reducing cogging {for example, refer to WO 2002/023702 ([Abstract], Fig. 1)}. In this conventional linear motor, however, since the gap element is provided between the armature blocks in order to decrease a cogging thrust, an assembly accuracy of each armature block is degraded, and thus there is a possibility of lower rigidity. Moreover, due to provision of an air space between the armature blocks, there is a further possibility of worse heat radiation performance, or that a magnetic path is interrupted, eventually resulting in deteriorated magnetic characteristics. Moreover, the gap element needs to be provided separately, thus increasing the number of parts, resulting in a possibility of lower productivity.

This fifth embodiment has been made to solve the above-mentioned problems, and has an object of providing a linear motor capable of decreasing a cogging thrust without negatively affecting productivity, rigidity, heat radiation performance and magnetic characteristics.

Fig. 27 is a plan view of a double-sided linear motor 1A according to the fifth embodiment of the invention. An armature 3 in this fifth embodiment is constructed being divided into two armature blocks 81a and 81b arranged in the motor driving direction. Each of the armature blocks 81a, 81b is provided with the first pole tooth 311 and the second pole tooth 312, and two second pole teeth 312 are disposed between the two armature blocks 81a and 81b. Furthermore, due to that these two second pole teeth 312 are disposed in contact, each armature block 81a, 81b and the permanent magnets opposed to the armature blocks 81a, 81b are arranged being shifted in their positional position in the motor driving direction. Moreover, a third pole tooth 313 is provided at the end of the armature 3.

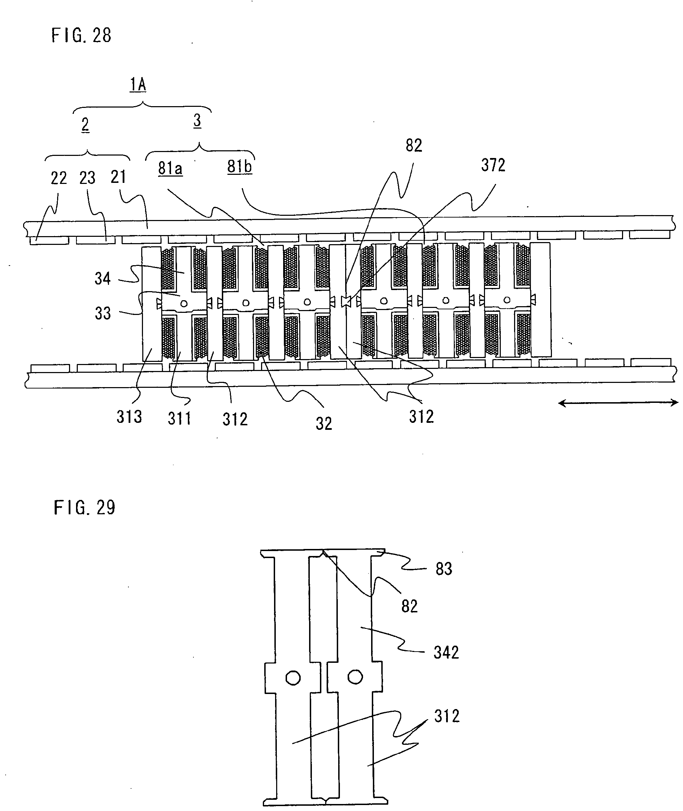

In the case where, as illustrated in Fig. 28, a joint portion 372 of the second pole tooth 312 is formed to be concave-shaped as illustrated in Fig. 14B, a contact surface 82 of the second pole tooth 312, being the contact surface of each armature block 81a, 81b can be wider. On the other hand, as illustrated in Fig. 27, in the case where the joint portion 372 of the second pole tooth 312 is formed to be convex-shaped, the contact surface 82 of the second pole tooth 312 comes to be narrower.

Further, there are some cases where the second pole tooth 312, to decrease a cogging thrust, is provided with a convex 83 at the end corner of a tooth portion 342 as illustrated in Fig. 29. In this case, the contact surface 82 becomes considerably narrow, and thus the advantages of this fifth embodiment described later cannot be sufficiently obtained.

Now, a method is described, in which a wider contact surface 82 between the second pole teeth 312 can be obtained even in the case of the convex-shaped joint portion 372 of the second pole tooth 312, or even in the case where the convex 83 is formed at the end corner of the tooth portion 342 of the second pole tooth 312.

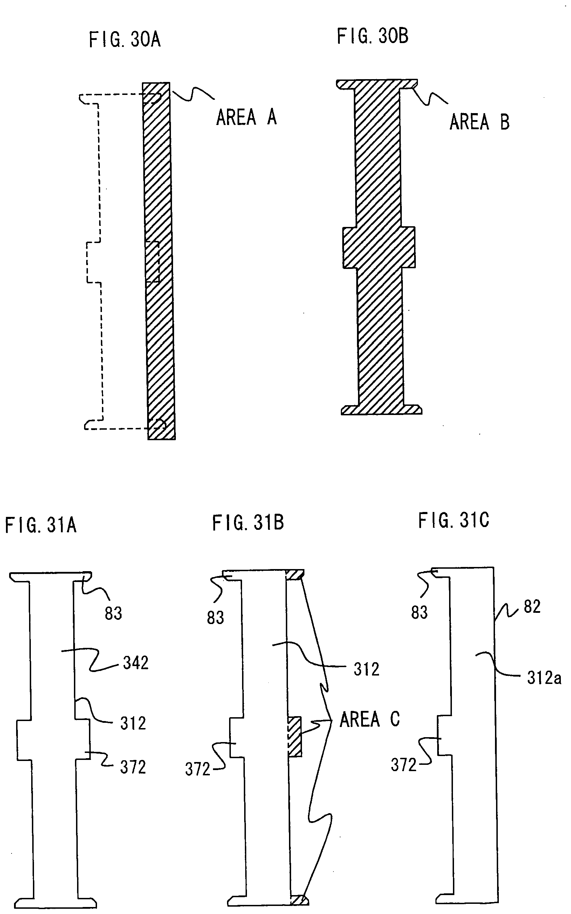

Figs. 30A and 30B are views each illustrating punching portions of a die. As illustrated in Fig. 30A, a hatched area A is first punched. Subsequently, the electromagnetic steel sheet having been punched is further punched in a hatched area B of Fig. 30B, thereby obtaining a second pole tooth of Fig. 31C. (This second pole tooth 312 is referred to as a second pole tooth 312a.) That is, since the hatched area A of Fig. 30A has been first punched, the steel sheet is in the state of no hatched area C of Fig 31B. Further, in this state, the hatched area B of Fig. 30B is punched, whereby the second pole tooth 312a of Fig. 31C can be obtained. On the other hand, the hatched area A of Fig. 30A is not punched, but only the hatched area B of Fig. 30B is punched, whereby a normal second pole tooth 312 illustrated in Fig. 31A can be obtained.

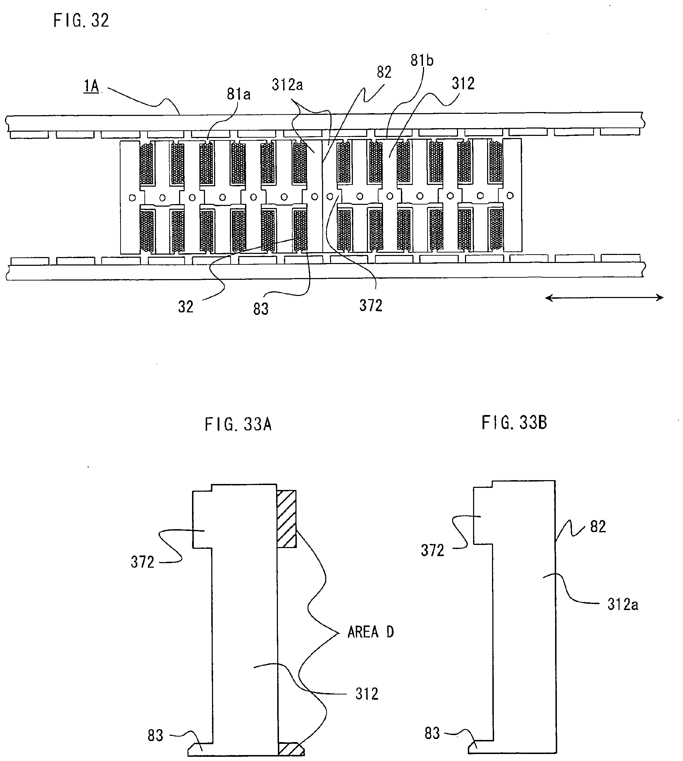

With the use of these second pole tooth 312 and second pole tooth 312a, a linear motor is constructed as illustrated in Fig. 32, thereby enabling to obtain a wider contact surface 82 of the armature blocks 81a and 81b, and thus making it possible to obtain sufficient advantages of this fifth embodiment.

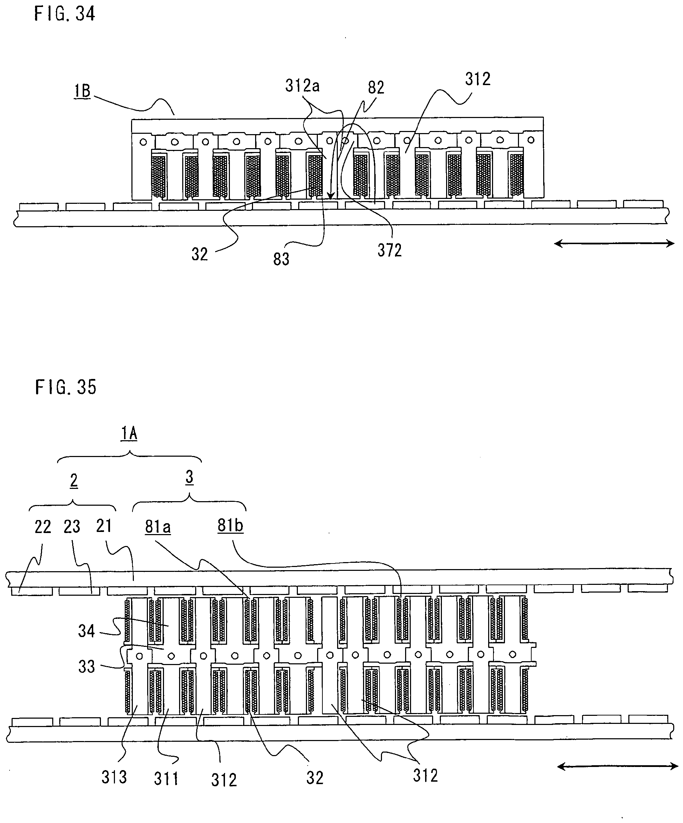

In addition, likewise, by adding the process of punching out a hatched area D from the second pole tooth 312 of Fig. 33A, a second pole tooth 312a of Fig. 33B can be obtained. Then, these second pole teeth 312a are disposed as illustrated in Fig. 34, thereby enabling to obtain a single-sided linear motor 1B as well.

As described above, according to this fifth embodiment, the phases of cogging thrusts generated by each of the armature blocks 81a, 81b and the permanent magnets 22, 23 are shifted, thus enabling to make a cogging thrust of the entire linear motor smaller.

Furthermore, the driving coil 32 and the second pole tooth 312a are constructed close to each other, so that higher heat radiation performance is achieved. In the case where the contact surface 82 of the second pole tooth 312a is made wider, not only heat radiation performance is improved, but also the armature blocks 81a an 81b can be disposed utilizing the contact surface 82. Thus, accuracy in positioning is increased, and productivity is also improved. In addition, since there is no gap between the armature blocks 81a and 81b, rigidity can be increased, and a space interrupting a magnetic path can be eliminated, resulting in improvement in magnetic characteristics. In particular, in the single-sided linear motor 1B, a return magnetic path indicated by the arrow of Fig. 34 can be utilized effectively, thus enabling to reduce a cogging thrust without decrease of thrust. Furthermore, since the second pole tooth 312 is used in order to shift the position of each armature block 81a, 81b, another member needs not to be prepared, resulting in improvement in productivity.

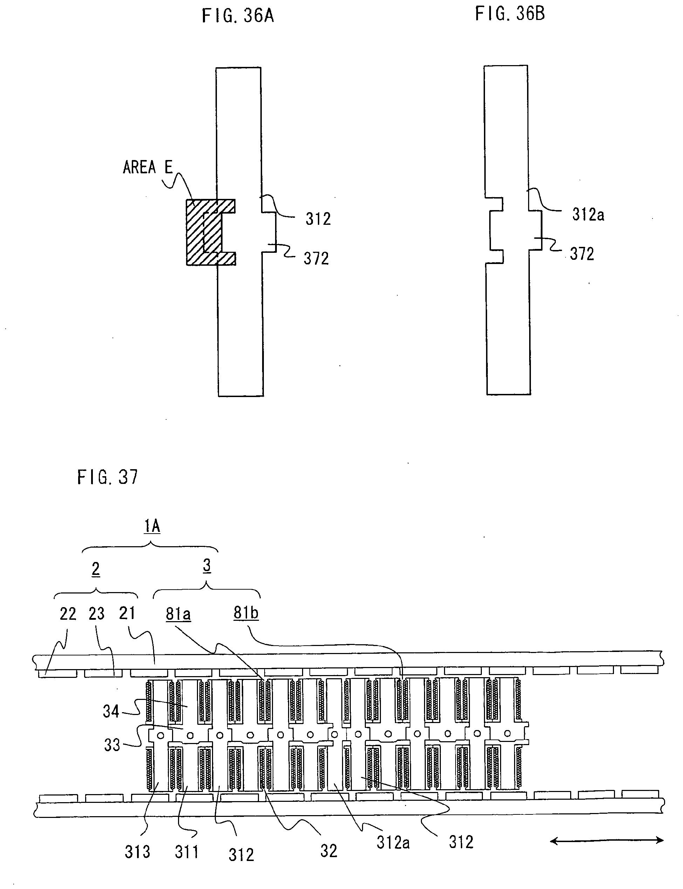

Additionally, in this fifth embodiment, an example where only the first pole tooth 311 is applied with winding is described. As illustrated in Fig. 35, however, this fifth embodiment is also preferably applicable to the case where the second pole tooth 312 is applied with winding. Further, in this case, more preferably, when the second pole tooth 312a on the armature block 81a side positioned between the armature blocks 81a and 81b is formed into a shape illustrated in Fig. 36B, by adding the process of punching out the hatched part E of the second pole tooth 312 as illustrated in Fig. 36A, then the second pole tooth 312a and the driving coil 32 are in close contact as illustrated in Fig. 37, so that heat radiation performance and rigidity can be increased.

In addition, the number of divided armature blocks and the position of being divided are not limited to those in this fifth embodiment.

### Embodiment 6.

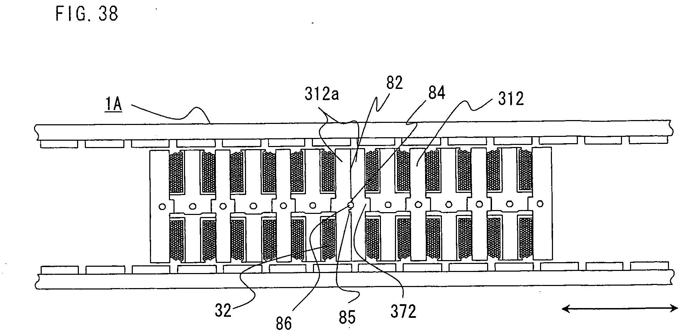

In the armature blocks 81a, 81b of Fig. 32, there is a possibility that the armature blocks 81a, 81b at left and right sides in the drawing are shifted in the vertical direction. Hence, according to a sixth embodiment, as illustrated in Fig. 38, a second pole tooth 312a is provided with a protrusion 84, a notch 85, and a hole-forming notch 86.

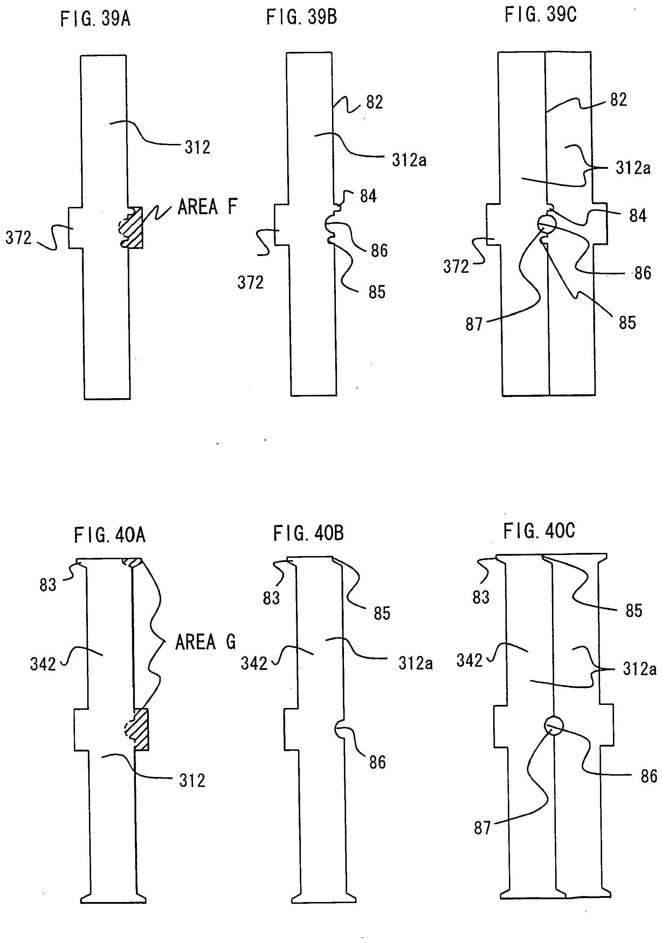

In this example, the protrusion 84, notch 85 and hole-forming notch 86 are formed to be illustrated in Fig. 39B, by adding the process of punching out a hatched part F of the second pole tooth 312 as illustrated in Fig. 39A. These second pole teeth 312a are inverted and brought in contact with each other at left and right as illustrated in Fig. 39C. At that time, two hole-forming notches 86 are combined over the two second pole teeth 312a to form a hole 87. And the assembled second pole teeth 312a can be used by putting a screw 5 through the hole 87 to be fastened to a fastening member, or by filling a mold in this hole 87 to be fixed.

As described above, according to this sixth embodiment, in addition to the advantages of the fifth embodiment, the shift in the vertical direction of the armature blocks 81a, 81b can be easily prevented, thus enabling to improve productivity.

Furthermore, the number, shape and position of the protrusion, notch and hole-forming notch 84, 85 and 86 that are provided at the second pole tooth 312a are not limited to those in this sixth embodiment. For example, as illustrated in Figs. 40A-40C, in the case of providing a convex 83 at the end corner of the tooth portion 342 of the second pole tooth 312, even if the second pole tooth 312a is formed into a shape as illustrated in Fig. 40B by an additional process of punching out a hatched part G of the second pole tooth 312 as illustrated in Fig. 40A, the convex 83 and notch 85 provided at the end corner portion of the tooth portion 342 are in contact as illustrated in Fig. 40C, thus enabling to prevent a shift.

## Claims

1. A linear motor comprising:
a field part (2) that includes a field yoke (21) extending in a motor driving direction, and a plurality of permanent magnets (22,23) which are disposed at predetermined intervals along said motor driving direction on said field yoke (21), and of which polarities are alternately different; and
an armature (3) that includes a plurality of pole teeth (31) disposed via a predetermined space from the permanent magnets (22, 23) of the field part (2) and disposed in order in said motor driving direction, and a driving coil (32) provided at said pole teeth (31);
said pole teeth (31) is formed of a yoke portion (33) positioned on the back side of a face opposite to said field part (2) and being in contact with said adjacent pole teeth (31), and
a tooth portion (34) formed to protrude from said yoke portion (33) to the side opposite to said field part (2); and
said pole teeth (31) includes a first pole tooth (311) and a second pole tooth (312) disposed adjacent to said first pole tooth (311);
only the first pole tooth (311) is wound with the driving coil (32);
an engaging portion (35) is provided at an end face on both sides at the yoke portion (331) of said first pole tooth (311), and a joint portion (372) to be engaged with said engaging portion (35) is provided at an end face on both sides at the yoke portion (332) of said second pole tooth (312);
said first pole tooth (311) includes a pair of a first core member (311a) and a second core member (311b) respectively having a yoke portion (331a, 331b) of different heights, and a tooth portion (341a, 341b) of the same height, wherein each yoke (331a, 331b) of the core member (311a, 311b) which has the greater yoke height, is provided with a hole (36) there-through, and said first and second core members (311a, 311b) are laminated so that respective tooth portions (341a, 341b) are aligned and
said laminated first and second core members (311a, 311b) are connected in said lamination direction; and
said first and second pole teeth (311, 312) are disposed in order along said motor driving direction and secured onto a fixing member (4) by means of a screw (5) passing through the hole (36) or a mold filling the hole (36), while engaging the engaging portion (35) of said first pole tooth (311) with the joint portion (372) of said second pole tooth (312).

2. A linear motor comprising:
a field part (2) that includes a plurality of permanent magnets (22, 23) which are disposed at predetermined intervals in opposition in two rows along a motor driving direction, and of which polarities are alternately different; and
an armature (3) that includes a plurality of pole teeth (31) disposed via a predetermined space from the permanent magnets (22,23) of said field part (2) and disposed in order in said motor driving direction, and a driving coil (32) provided at said pole teeth (31);
said pole teeth (31) is formed of a yoke portion (33) positioned at the central portion between said two rows of permanent magnets (22,23) and being in contact with said adjacent pole teeth (31), and a tooth portion (34) formed to protrude from said yoke portion (33) to both sides opposite to said permanent magnets (22, 23); and
said pole teeth (31) includes a first pole tooth (311) and a second pole tooth (312) disposed adjacent to said first pole tooth (311); and said driving coil (32) provided at any one or both of said first pole tooth (311) and said second pole tooth (312);
an engaging portion (35) is provided at an end face on both sides at the yoke portion (331) of said first pole tooth (311), and a joint portion (372) to be engaged with said engaging portion (35) is provided at an end face on both sides at the yoke portion (332) of said second pole tooth (312);
said first pole tooth (311) includes a pair of core members (311a, 311b) being a first core member (311a) and a second core member (311b) having a yoke portion (331a, 331b) of different heights, and a tooth portion (341a, 341b) of the same height, wherein each yoke (331a, 331b) of the core member (311a, 311b) which has the greater yoke height, is provided with a hole (36) there-through, which is positioned so as to be at the centre of the first pole tooth (311) when yoke portion contact surfaces (3311a, 3311b) of the first and second core members (331a, 331b) are in contact to form the first pole tooth (331);
on one side, said first and second core members (311a, 311b) are laminated so that respective tooth portions (341a, 341b) are aligned and said laminated first and second core members (311a, 311b) are connected in said lamination direction, and on the other side, said first and second core members (311a, 311b) to be a pair with said laminated first and second core members (311a, 311b) are laminated so that respective tooth portions (341a, 341b) are aligned and said laminated first and second core members (311a, 311b) are connected in said lamination direction;
and said first and second core members (311a, 311b) on both sides are constructed to be connected so that the yoke portions (331a, 331b) of different heights are in contact; and
said first and second pole teeth (311, 312) are disposed in order along said motor driving direction and secured onto a fixing member (4) by means of a screw (5) passing through the hole (36) or a mold filling the hole (36) while engaging the engaging portion (35) of said first pole tooth (311) with the joint portion (372) of said second pole tooth (312).

3. The linear motor according to claim 2, wherein at the yoke portion (331a, 331b) of said first and second core members (311a, 311b), a notch (391a) is provided at a yoke portion contact surface (3311a, 3311b) on one side, and a protrusion (391b) to be engaged with said notch (391a) is provided at a yoke portion contact surface (3311a, 3311b) on the other side.

4. The linear motor according to claim 1 or 2, wherein said armature (3) is divided into a plurality of armature blocks (81a, 81b) and arranged in a motor driving direction, and said armature blocks (81a, 81b) comprise said first pole tooth (311) and a second pole tooth (312) disposed adjacent to said first pole tooth (311);
and wherein said second pole tooth (312) is disposed at an end on the side where each armature block (81a,81b) is in contact, and by arranging adjacent armature blocks (81a, 81b) with said second pole teeth (312) being in contact therewith, each armature block (81a, 81b) and said permanent magnet (22, 23) opposed thereto are in a shifted positional relation.

5. The linear motor according to claim 4, wherein a notch (85) is formed at a contact surface (82) on one side of the second pole tooth (312) positioned at the end of said armature block (81a, 81b), and a protrusion (84) is formed to be in contact with said notch (85) at a contact surface (82) on the other side.

6. The linear motor according to any one of claims 1 through 5, wherein a third pole tooth (313) is disposed at the end of said armature (3).

## Patentansprüche

1. Linearmotor, umfassend:
ein Feldteil (2), welches ein Feldjoch (21), welches sich in einer Motorantriebsrichtung erstreckt, und eine Vielzahl von Permanentmagneten (22, 23) aufweist, die in vorbestimmten Abständen entlang der Motorantriebsrichtung auf dem Feldjoch (21) angeordnet sind, und deren Polaritäten sich abwechselnd unterscheiden; und einen Anker (3), der eine Mehrzahl von Polzähnen (31), die über einen vorbestimmten Abstand von den Permanentmagneten (22, 23) des Feldteils (2) angeordnet sind und in Reihenfolge in der Motorantriebsrichtung angeordnet sind, und eine Antriebsspule (32) aufweist, die an den Polzähnen (31) vorgesehen ist;
wobei die Polzähne (31) aus einem Jochabschnitt (33) gebildet sind, der auf der Rückseite von einer dem Feldteil (2) gegenüberliegenden Seite angeordnet ist und mit den benachbarten Polzähnen (31) in Kontakt steht, und
einen Zahnabschnitt (34), welcher derart ausgebildet ist, um von dem Jochabschnitt (33) zu der Seite gegenüberliegend zu dem Feldteil (2) vorzustehen; und
wobei die Polzähne (31) einen ersten Polzahn (311) und einen zweiten Polzahn (312), der benachbart zu dem ersten Polzahn (311) angeordnet ist, umfassen;
wobei lediglich der erste Polzahn (311) durch die Antriebsspule (32) umwickelt ist;
wobei ein Eingriffsabschnitt (35) an einer Endfläche auf beiden Seiten an dem Jochabschnitt (331) des ersten Polzahns (311) vorgesehen ist, und ein Verbindungsabschnitt (372) zur Ineingriffnahme durch den Eingriffsabschnitt (35) an einer Endfläche auf beiden Seiten an dem Jochabschnitt (332) des zweiten Polzahns (312) vorgesehen ist;
wobei der erste Polzahn (311) ein Paar aus einem ersten Kernelement (311a) und einem zweiten Kernelement (311b) enthält, die jeweils einen Jochabschnitt (331a, 331b) unterschiedlicher Höhe und einen Zahnabschnitt (341a, 341b) gleicher Höhe aufweisen, wobei jedes Joch (331a, 331b) des Kernelements (311a, 311b), welches die größere Jochhöhe hat, mit einem durchgehenden Loch (36) versehen ist, und wobei das erste und das zweite Kernelement (311a, 311b) derart laminiert sind, dass jeweilige Zahnabschnitte (341a, 341b) ausgerichtet sind, und wobei das laminierte erste und zweite Kernelement (311a, 311b) in der Laminierungsrichtung verbunden sind; und
wobei der erste und zweite Polzahn (311, 312) in einer Reihenfolge entlang der Motorantriebsrichtung angeordnet sind und an einem Befestigungselement (4) mittels einer Schraube (5), welche durch das Loch (36) durchläuft, oder einem Gussmaterial, welches das Loch (36) füllt, befestigt sind, während der Eingriffsabschnitt (35) des ersten Polzahns (311) mit dem Verbindungsabschnitt (372) des zweiten Polzahns (312) in Eingriff gebracht ist.

2. Linearmotor, umfassend:
ein Feldteil (2), welches eine Vielzahl von Permanentmagneten (22, 23) enthält, die in vorbestimmten Abständen gegenüberliegend in zwei Reihen entlang einer Motorantriebsrichtung angeordnet sind, und deren Polaritäten sich abwechselnd unterscheiden; und
einen Anker (3), der eine Vielzahl von Polzähnen (31), die über einen vorbestimmten Abstand von den Permanentmagneten (22, 23) des Feldteils (2) angeordnet sind und in Reihenfolge in der Motorantriebsrichtung angeordnet sind, und eine Antriebsspule (32), die an den Polzähnen (31) vorgesehen ist, aufweist;
wobei die Polzähne (31) aus einem Jochabschnitt (33), welcher an der mittleren Position zwischen den zwei Reihen von Permanentmagneten (22, 23) angeordnet ist und mit den benachbarten Polzähnen (31) in Kontakt steht, und einem Zahnabschnitt (34), welcher derart ausgebildet ist, dass er von dem Jochabschnitt (33) an beide Seiten gegenüber den Permanentmagneten (22, 23) vorragt, ausgebildet sind; und
wobei die Polzähne (31) einen ersten Polzahn (311) und einen zweiten Polzahn (312) umfassen, der benachbart zu dem ersten Polzahn (311) angeordnet ist; und
wobei die Antriebsspule (32) an einem oder beiden von dem ersten Polzahn (311) und dem zweiten Polzahn (312) vorgesehen ist;
wobei ein Eingriffsabschnitt (35) an einer Endfläche auf beiden Seiten an dem Jochabschnitt (331) des ersten Polzahns (311) vorgesehen ist, und ein Verbindungsabschnitt (372) zur Ineingriffnahme durch den Eingriffsabschnitt (35) an einer Endfläche auf beiden Seiten an dem Jochabschnitt (332) des zweiten Polzahns (312) vorgesehen ist;
wobei der erste Polzahn (311) ein Paar von Kernelementen (311a, 311b) enthält, nämlich ein erstes Kernelement (311a) und ein zweites Kernelement (311b) mit einem Jochabschnitt (331a, 331b) unterschiedlicher Höhe und einem Zahnabschnitt (341a, 341b) gleicher Höhe, wobei jedes Joch (331a, 331b) des Kernelements (311a, 311b), welches die größere Jochhöhe hat, mit einem durchgehenden Loch (36) versehen ist, welches derart positioniert ist, dass es sich in der Mitte des ersten Polzahns (311) befindet, wenn Jochabschnitt-Kontaktflächen (3311a, 3311b) des ersten und zweiten Kernelements (331a, 331b) in Kontakt stehen, um den ersten Polzahn (331) auszubilden;
wobei an einer Seite das erste und zweite Kernelement (311a, 311b) derart laminiert sind, dass jeweilige Zahnabschnitte (341a, 341b) ausgerichtet sind, und wobei das laminierte erste und zweite Kernelement (311a, 311b) in der Laminierungsrichtung verbunden sind, und wobei an der anderen Seite das erste und zweite Kernelement (311a, 311b), welche ein Paar sind mit dem laminierten ersten und zweiten Kernelement (311a, 311b), derart laminiert sind, dass jeweilige Zahnabschnitte (341a, 341b) ausgerichtet sind und das laminierte erste und zweite Kernelement (311a, 311b) in der Laminierungsrichtung verbunden sind;
und wobei das erste und zweite Kernelement (311a, 311b) an beiden Seiten derart konstruiert sind, dass sie so verbunden werden, dass die Jochabschnitte (331a, 331b) unterschiedlicher Höhen in Kontakt stehen; und
wobei der erste und zweite Polzahn (311, 312) in einer Reihenfolge entlang der Motorantriebsrichtung angeordnet sind und an einem Befestigungselement (4) mittels einer Schraube (5), welche durch das Loch (36) durchläuft, oder einem Gussmaterial, welches das Loch (36) füllt, befestigt sind, während der Eingriffsabschnitt (35) des ersten Polzahns (311) mit dem Verbindungsabschnitt (372) des zweiten Polzahns (312) in Eingriff gebracht ist.

3. Linearmotor nach Anspruch 2, wobei an dem Jochabschnitt (331a, 331b) des ersten und zweiten Kernelements (311a, 311b) eine Kerbe (391a) an einer Jochabschnitt-Kontaktfläche (3311a, 3311b) an einer Seite vorgesehen ist, und wobei ein Vorsprung (391b), der mit der Kerbe (391a) in Eingriff zu bringen ist, an einer Jochabschnitt-Kontaktfläche (3311a, 3311b) an der anderen Seite vorgesehen ist.

4. Linearmotor nach Anspruch 1 oder 2, wobei der Anker (3) in mehrere Ankerblöcke (81a, 81b) unterteilt ist und in einer Motorantriebsrichtung angeordnet ist, und wobei die Ankerblöcke (81a, 81b) den ersten Polzahn (311) und ein zweiter Polzahn (312), der benachbart zu dem ersten Polzahn (311) angeordnet ist, umfassen;
und wobei der zweite Polzahn (312) an einem Ende an der Seite angeordnet ist, an der jeder Ankerblock (81a, 81b) in Kontakt steht, und wobei, indem benachbarte Ankerblöcke (81a, 81b) mit den zweiten Polzähnen (312) in Kontakt hiermit angeordnet sind, jeder Ankerblock (81a, 81b) und der diesem gegenüberliegende Permanentmagnet (22, 23) in einer verschobenen Positionsbeziehung stehen.

5. Linearmotor nach Anspruch 4, wobei eine Kerbe (85) an einer Kontaktfläche (82) an einer Seite des zweiten Polzahns (312), an dem Ende des Ankerblocks (81a, 81b) positioniert, ausgebildet ist, und wobei ein Vorsprung (84) derart ausgebildet ist, dass er an einer Kontaktfläche (82) an der anderen Seite mit der Kerbe (85) in Kontakt steht.

6. Linearmotor nach einem der Ansprüche 1 bis 5, wobei ein dritter Polzahn (313) an dem Ende des Ankers (3) angeordnet ist.

## Revendications

1. Moteur linéaire comprenant :
une partie de champ (2) qui inclut une culasse de champ (21) s'étendant dans une direction d'entraînement du moteur, et une pluralité d'aimants permanents (22, 23) qui sont disposés à intervalles prédéterminés le long de ladite direction d'entraînement du moteur sur ladite culasse de champ (21), et dont les polarités sont alternativement différentes ; et
une armature (3) qui inclut une pluralité de dents polaires (31) disposées via un espace prédéterminé depuis les aimants permanents (22, 23) de la partie de champ (2) est disposée dans l'ordre dans ladite direction d'entraînement du moteur, et une bobine motrice (32) prévue au niveau desdites dents polaires (31);
lesdites dents polaires (31) sont formées sur une portion de culasse (33) positionnée sur le côté arrière d'une face opposée à ladite partie de champ (2) et en contact avec lesdites dents polaires adjacentes (31), et
une portion de dent (34) formée de manière à se projeter depuis ladite portion de culasse (33) vers le côté opposé à ladite partie de champ (2) ; et
lesdites dents polaires (31) incluent une première dent polaire (311) et une seconde dent polaire (312) disposée adjacente à ladite première dent polaire (311) ;
seule la première dent polaire (311) est enroulée avec la bobine motrice (32) ;
une partie d'engagement (35) est prévue au niveau d'une face terminale sur les deux côtés sur la portion de culasse (331) de ladite première dent polaire (60), et une portion de jonction (372) destinée à être engagée avec ladite portion d'engagement (35) est prévue au niveau d'une face terminale sur les deux côtés sur la portion de culasse (332) de ladite seconde dent polaire (312) ;
ladite première dent polaire (311) inclut une paire constituée d'un premier élément de noyau (311a) et d'un second élément de noyau (311b) ayant respectivement une portion de culasse (331a, 331b) de hauteurs différentes, et une portion de dent (341a, 341b) de la même hauteur, dans lequel chaque culasse (331a, 331b) de l'élément de noyau (311a, 311b) qui présente la plus grande hauteur de culasse, est dotée d'un trou (36) qui la traverse, et ledit premier et ledit second élément de noyau (311a, 311b) sont laminés de telle façon que des portions de dents respectives (341a, 341b) sont alignées et ledit premier et ledit second élément de noyau (311a, 311b) laminés sont connectés dans ladite direction de laminage ; et
ladite première et ladite seconde dent polaire (311, 312) sont disposées dans l'ordre le long de ladite direction d'entraînement du moteur et attachées sur un élément de fixation (4) au moyen d'une vis (5) passant à travers le trou (36) ou d'une pièce moulée qui remplit le trou (36), tout en engageant ladite portion d'engagement (35) de ladite première dent polaire (311) avec la portion de jonction (372) de ladite seconde dent polaire (312).

2. Moteur linéaire comprenant :
une partie de champ (2) qui inclut une pluralité d'aimants permanents (22, 23) qui sont disposés à intervalles prédéterminés en opposition dans deux rangées le long d'une direction d'entraînement du moteur, et dont les polarités sont alternativement différentes ; et
une armature (3) qui inclut une pluralité de dents polaires (31) disposées via un espace prédéterminé depuis les aimants permanents (22, 23) de ladite partie de champ (2) et disposées dans l'ordre dans ladite direction d'entraînement du moteur, et une bobine motrice (32) prévue au niveau desdites dents polaires (31);
lesdites dents polaires (31) sont formées d'une portion de culasse (33) positionnée à la portion centrale entre lesdites deux rangées d'aimants permanents (22, 23), et en contact avec lesdites dents polaires adjacentes (31), et d'une portion de dent (34) formée de manière à se projeter depuis ladite portion de culasse (33) vers deux côtés opposés auxdits aimants permanents (22, 23) ; et
lesdites dents polaires (31) incluent une première dent polaire (311) et une seconde dent polaire (312) disposée adjacente à ladite première dent polaire (311) ; et
ladite bobine motrice (32) est prévue sur l'une quelconque de ladite première dent polaire (311) et de ladite seconde dent polaire (312), ou encore sur les deux ;
une portion d'engagement (35) est prévue au niveau d'une face terminale sur les deux côtés sur la portion de culasse (331) de ladite première dent polaire (311), et une portion de jonction (372) destinée à être engagée avec ladite portion d'engagement (35) est prévue au niveau d'une face terminale sur les deux côtés sur la portion de culasse (332) de ladite seconde dent polaire (312) ;
ladite première dent polaire (311) inclut une paire d'éléments de noyau (311a, 311b), qui sont un premier élément de noyau (311a) et un second élément de noyau (311b) ayant une portion de culasse (331a, 331b) de hauteurs différentes, et une portion de dent (341a, 341b) de la même hauteur, dans lequel chaque culasse (331a, 331b) de l'élément de noyau (311a, 311b) qui présente la plus grande hauteur de culasse est dotée d'un trou (36) qui la traverse, qui est positionné de manière à se trouver au centre de la première dent polaire (311) quand les surfaces de contact de la portion de culasse (3311a, 3311b) du premier et du second élément de noyau (331a, 331b) sont en contact pour former la première dent polaire (331);
sur un côté, ledit premier et ledit second élément de noyau (311a, 311b) sont laminés de sorte que des portions de dents respectives (341a, 341b) sont alignées et ledit premier et ledit second élément de noyau (311a, 311b) laminés sont connectés dans ladite direction de laminage et, de l'autre côté, ledit premier et ledit second élément de noyau (311a, 311b) destinés à former une paire avec ledit premier et ledit second élément de noyau (311a, 311b) laminés sont laminés de telle façon que des portions de dents respectives (341a, 341b) sont alignées et ledit premier et ledit second élément de noyau (311a, 311b) laminés sont connectés dans ladite direction de laminage ;
et ledit premier et ledit second élément de noyau (311a, 311b) sur les deux côtés sont construits pour être connectés de telle façon que les portions de culasse (331a, 331b) de hauteurs différentes sont en contact ; et
lesdites premières et lesdites secondes dents polaires (311, 312) sont disposées dans l'ordre le long de ladite direction d'entraînement du moteur et attachées sur un élément de fixation (4) au moyen d'une vis (5) qui passe à travers le trou (36) ou d'une pièce moulée qui remplit le trou (36) tout en engageant la portion d'engagement (35) de ladite première dent polaire (311) avec la portion de jonction (372) de ladite seconde dent polaire (312).

3. Moteur linéaire selon la revendication 2, dans lequel, au niveau de la portion de culasse (331a, 331b) dudit premier et dudit second élément de noyau (311a, 311b), une encoche (391a) est prévue au niveau d'une surface de contact (3311a, 3311b) de la portion de culasse sur un côté, et une projection (391b) destinée à être engagée avec ladite encoche (391a) est prévue au niveau d'une surface de contact (3311a, 3311b) de la portion de culasse sur l'autre côté.

4. Moteur linéaire selon la revendication 1 ou 2, dans lequel ladite armature (3) est divisée en une pluralité de blocs d'armature (81a, 81b) et agencée dans une direction d'entraînement du moteur, et lesdits blocs d'armature (81a, 81b) comprennent ladite première dent polaire (311) et une seconde dent polaire (72) disposée adjacente à ladite première dent polaire (300) ;
et dans lequel ladite seconde dent polaire (300) est disposée à une extrémité sur le côté où chaque bloc d'armature (81a, 81b) est en contact, et en agençant des blocs d'armature adjacents (81a, 81b) de sorte que lesdites secondes dents polaires (312) soient en contact avec ceux-ci, chaque bloc d'armature (81a, 81b) et ledit aimant permanent (22, 23) opposé à celui-ci sont dans une relation de position décalée.

5. Moteur linéaire selon la revendication 4, dans lequel une encoche (85) est formée au niveau d'une surface de contact (82) sur un côté de la seconde dent polaire (312) positionnée à l'extrémité dudit bloc d'armature (81a, 81b), et une projection (84) est formée de manière à être en contact avec ladite encoche (85) au niveau d'une surface de contact (82) sur l'autre côté.

6. Moteur linéaire selon l'une quelconque des revendications 1 à 5, dans lequel une troisième dent polaire (313) est disposée à l'extrémité de ladite armature (3).
